# EUROPÄISCHE PATENTSCHRIFT

(11) **EP 3 237 881 B1**
(45) Veröffentlichungstag und Bekanntmachung des Hinweises auf die Patenterteilung: **22.04.2020**
(21) Anmeldenummer: 15820526.0
(22) Anmeldetag: 23.12.2015
(51) Int. Cl.: G01N 15/06, F02D 41/14

(54) **SENSOR ZUR DETEKTION VON RUSSPARTIKEL IN EINEM ABGASSTROM VON VERBRENNUNGSMOTOREN, SENSORSYSTEM, VERFAHREN ZUM BETREIBEN EINES SENSORS, VERFAHREN ZUR HERSTELLUNG EINES DERARTIGEN SENSORS UND VERWENDUNG EINES DERARTIGEN SENSORS**
SENSOR FOR DETECTING SOOT PARTICLES IN AN EXHAUST GAS STREAM OF A COMBUSTION ENGINE, SENSOR SYSTEM, METHOD FOR OPERATING A SENSOR, METHOD FOR PRODUCING A SENSOR OF THIS TYPE AND USE OF A SENSOR OF THIS TYPE
CAPTEUR DE DÉTECTION DE PARTICULES DE SUIE DANS UN FLUX DE GAZ D'ÉCHAPPEMENT D'UN MOTEUR À COMBUSTION, SYSTÈME CAPTEUR, PROCÉDÉ POUR FAIRE FONCTIONNER UN CAPTEUR, PROCÉDÉ DE FABRICATION D'UN TEL CAPTEUR, ET UTILISATION D'UN TEL CAPTEUR

(30) Priorität: 23.12.2014 DE 102014119484
(43) Veröffentlichungstag der Anmeldung: 01.11.2017
(73) Patentinhaber: Heraeus Nexensos GmbH, 63801 Kleinostheim (DE)
(72) Erfinder: ASMUS, Tim, 35469 Allendorf-Winnen (DE); WIENAND, Karlheinz, 63741 Aschaffenburg (DE); DIETMANN, Stefan, 63775 Alzenau (DE); KUNZ, Martin, 76337 Waldbronn (DE)
(74) Vertreter: Kilchert, Jochen
(86) Internationale Anmeldenummer: PCT/EP2015/081100
(87) Internationale Veröffentlichungsnummer: WO 2016/102636

(56) Entgegenhaltungen:
- WO-A1-2005/050174
- WO-A2-2008/033419
- DE-A1-102004 043 121
- DE-A1-102007 047 078
- DE-A1-102008 041 808
- DE-T2- 69 925 727
- US-A1- 2007 117 243

## Beschreibung

Die Erfindung bezieht sich auf einen Sensor zur Detektion von Rußpartikel in einem Abgasstrom von Verbrennungsmotoren. Die Erfindung betrifft des Weiteren ein Sensorsystem, ein Verfahren zum Betreiben eines Sensors, ein Verfahren zur Herstellung eines erfindungsgemäßen Sensors und eine Verwendung eines derartigen Sensors.

Aus dem Stand der Technik sind Sensoren bekannt, die einen Sensorträger aufweisen, wobei auf diesem Sensorträger in planarer Anordnung Elektroden und Heizstrukturen angeordnet sind. In einem Detektionsbetrieb lagern sich polarisierbare und/oder elektrisch leitfähige Partikel auf dieser planaren Anordnung ab. Die abgelagerten Partikel bewirken eine Reduzierung des Widerstandes zwischen den Elektroden, wobei dieser Abfall des Widerstandes als Maß für die abgelagerte Partikelmasse herangezogen wird. Beim Erreichen eines vordefinierten Schwellwertes bezüglich des Widerstandes wird die Sensoranordnung mit den Heizstrukturen erhitzt, so dass die abgelagerten Partikel verbrannt werden und der Sensor nach dem Reinigungsvorgang für einen weiteren Detektionszyklus genutzt werden kann.

In DE 10 2004 043 121 A1 wird ein Rußsensor mit zwei Messelektroden offenbart, die übereinander angeordnet sind. Zwischen den Messelektroden befindet sich ein poröses, für die zu bestimmenden Partikel diffusionsoffenes, Material. Die im offenbarten Sensor ausgebildeten Öffnungen stellen das Resultat eines statistischen Prozesses dar und sind somit nicht gezielt eingebracht.

Die WO 2005/050174 A1 betrifft ebenfalls einen Sensor zum Erfassen von Partikeln in einem Gasstrom, d.h. einen Rußsensor. Partikel strömen dabei durch vier ausgebildete Kanäle, ohne sich an einem Boden absetzen zu können. Die Kanäle sind mit anderen Worten vollständige Materialaussparungen.

In der DE 10 2005 029 219 A1 wird ein Sensor zur Detektion von Partikel in einem Abgasstrom von Verbrennungsmotoren beschrieben, wobei die Elektroden-, Heizer- und Temperatursensor-Strukturen in einer planaren Anordnung auf einem Sensorträger aufgebracht sind. Ein Nachteil dieser Sensoranordnung besteht darin, dass bei den zu überbrückenden Elektroden eine Mindestlänge notwendig ist, um in einen akzeptablen Empfindlichkeitsbereich beim Messen von leitfähigen oder polarisierbaren Partikeln wie z.B. Ruß gelangen zu können. Hierzu ist allerdings eine bestimmte Größe des Sensorbauelements notwendig, um die Mindestlänge für die zu überbrückenden Elektroden anordnen zu können. Dies bringt entsprechende Kostennachteile bei der Herstellung dieser Sensorbauelemente mit sich.

Der Erfindung liegt die Aufgabe zu Grunde, einen weiterentwickelten Sensor zur Detektion von Rußpartikel in einem Abgasstrom von Verbrennungsmotoren anzugeben, wobei der Sensor hinsichtlich seiner Größe minimiert ist, so dass die vorerwähnten Nachteile überwunden werden können.

Des Weiteren ist es die Aufgabe der vorliegenden Erfindung, ein Sensorsystem, ein Verfahren zum Betreiben eines Sensors und ein Verfahren zur Herstellung eines derartigen Sensors anzugeben.

Erfindungsgemäß wird diese Aufgabe durch einen Sensor zur Detektion von Rußpartikeln in einem Abgasstrom von Verbrennungsmotoren gemäß Anspruch 1 gelöst. Im Hinblick auf das Sensorsystem wird die Aufgabe durch die Merkmale des Anspruchs 9 gelöst. Im Hinblick auf das Verfahren zum Betreiben eines Sensors wird die Aufgabe durch die Merkmale des Anspruchs 10, im Hinblick auf das Verfahren zur Herstellung eines Sensors wird die Aufgabe durch die Merkmale des Anspruches 12 gelöst. Im Hinblick auf die Verwendung eines Sensors wird die Aufgabe durch die Merkmale des Anspruchs 15gelöst.

Vorteilhafte und zweckmäßige Ausgestaltungen des erfindungsgemäßen Sensors bzw. des erfindungsgemäßen Verfahrens zum Betreiben eines Sensors bzw. des erfindungsgemäßen Verfahrens zur Herstellung eines derartigen Sensors bzw. der erfindungsgemäßen Verwendung des Sensors sind in den Unteransprüchen angegeben.

Die Erfindung beruht auf dem Gedanken, einen Sensor zur Detektion von Rußpartikel in einem Abgasstrom von Verbrennungsmotoren anzugeben, umfassend ein Substrat und zwei Elektrodenschichten, wobei eine erste Elektrodenschicht und mindestens eine, zwischen dem Substrat und der ersten Elektrodenschicht angeordnete, zweite Elektrodenschicht angeordnet sind, wobei zwischen der ersten Elektrodenschicht und der mindestens einen zweiten Elektrodenschicht mindestens eine Isolationsschicht ausgebildet ist und in der ersten Elektrodenschicht und in der mindestens einen Isolationsschicht jeweils mindestens eine Öffnung ausgebildet ist, wobei die Öffnung der ersten Elektrodenschicht und die Öffnung der Isolationsschicht zumindest abschnittsweise derart übereinander angeordnet sind, dass mindestens ein Durchgang zur zweiten Elektrodenschicht gebildet ist.

Erfindungsgemäß wird ein Sensor angegeben, umfassend ein Substrat, eine erste Elektrodenschicht, eine, zwischen dem Substrat und der ersten Elektrodenschicht angeordnete, zweite Elektrodenschicht, wobei zwischen der ersten Elektrodenschicht und der zweiten Elektrodenschicht eine erste Isolationsschicht ausgebildet ist, zwischen der ersten Isolationsschicht und der ersten Elektrodenschicht mindestens eine dritte Elektrodenschicht ausgebildet ist, und zwischen der mindestens dritten Elektrodenschicht und der ersten Elektrodenschicht mindestens eine zweite Isolationsschicht ausgebildet ist, wobei in der ersten Elektrodenschicht, in der mindestens zweiten Isolationsschicht, in der mindestens dritten Elektrodenschicht und in der ersten Isolationsschicht jeweils mindestens eine Öffnung ausgebildet ist, wobei die Öffnung der ersten Elektrodenschicht, die Öffnung der mindestens zweiten Isolationsschicht, die Öffnung der mindestens dritten Elektrodenschicht und die Öffnung der Isolationsschicht zumindest abschnittsweise derart übereinander angeordnet sind, dass mindestens ein Durchgang zur zweiten Elektrodenschicht gebildet ist.

Mit anderen Worten wird ein Sensor zur Verfügung gestellt, wobei eine erste und eine zweite Elektrodenschicht horizontal übereinander angeordnet sind und zwischen diesen beiden Elektrodenschichten eine erste Isolationsschicht, mindestens eine dritte Elektrodenschicht und mindestens eine zweite Isolationsschicht ausgebildet ist. Um einen Durchgang zur zweiten Elektrodenschicht zu bilden, so dass zu detektierende Partikel, insbesondere Rußpartikel, mit Hilfe des Durchgangs zur zweiten Elektrodenschicht gelangen können, weisen sowohl die erste und dritte Elektrodenschicht als auch die erste und zweite Isolationsschicht jeweils mindestens eine Öffnung auf, wobei die Öffnung der ersten und dritten Elektrodenschicht und die Öffnung der ersten und zweiten Isolationsschicht zumindest abschnittsweise übereinander angeordnet sind, so dass der Durchgang gebildet ist oder bildbar ist.

Partikel können demnach lediglich von einer Seite des Sensors aus, nämlich von der Seite des Sensors aus, die der ersten Elektrodenschicht am nächsten zugeordnet ist, über mindestens einen Durchgang zur zweiten Elektrodenschicht gelangen. Die elektrisch leitfähigen und/oder polarisierbaren Partikel liegen demnach auf einem Abschnitt der zweiten Elektrodenschicht auf.

Der erfindungsgemäße Sensor umfasst mindestens drei Elektrodenschichten und mindestens zwei Isolationsschichten, wobei zwischen zwei Elektrodenschichten vorzugsweise immer eine Isolationsschicht ausgebildet ist.

Eine Isolationsschicht kann auch aus zwei oder mehreren Teilschichten bestehen, die nebeneinander und/oder übereinander angeordnet sein können. Zwei oder mehrere Teilschichten einer Isolationsschicht können aus unterschiedlichen Materialen bestehen und/oder unterschiedliche Materialien aufweisen.

Eine Elektrodenschicht kann auch aus zwei oder mehreren Teilschichten bestehen, die nebeneinander und/oder übereinander angeordnet sein können. Zwei oder mehrere Teilschichten einer Elektrodenschicht können aus unterschiedlichen Materialen bestehen und/oder unterschiedliche Materialien aufweisen.

Es ist möglich, dass der Sensor mehr als drei Elektrodenschichten und mehr als zwei Isolationsschichten umfasst, wobei auch in diesem Zusammenhang zwischen zwei Elektrodenschichten vorzugsweise immer eine Isolationsschicht ausgebildet ist. Im Folgenden gilt, dass unter der Formulierung "mindestens dritte(n) Elektrodenschicht" zu verstehen ist, dass auch eine vierte und/oder fünfte und/oder sechste und/oder siebte und/oder achte und/oder neunte und/oder zehnte Elektrodenschicht anstelle der genannten dritten Elektrodenschicht gemeint sein kann.

Im Folgenden gilt, dass unter der Formulierung "mindestens zweite(n) Isolationsschicht" zu verstehen ist, dass auch eine dritte und/oder vierte und/oder fünfte und/oder sechste und/oder siebte und/oder achte und/oder neunte Isolationsschicht anstelle der genannten zweiten Isolationsschicht gemeint sein kann.

Der erfindungsgemäße Sensor kann mit anderen Worten einen Schichtverbund aufweisen, der mindestens drei Elektrodenschichten und mindestens zwei Isolationsschichten umfasst. Als zweite Elektrodenschicht wird die zum Substrat nächste Elektrodenschicht bezeichnet, als erste Elektrodenschicht, die vom Substrat maximal beabstandete Elektrodenschicht. Zwischen der ersten Elektrodenschicht und der zweiten Elektrodenschicht befindet sich beispielsweise mindestens eine dritte Elektrodenschicht, wobei zwischen jeweils zwei Elektrodenschichten mindestens eine Isolationsschicht ausgebildet ist.

Die Elektrodenschichten sind übereinander, insbesondere übereinander geschichtet angeordnet, wobei die Elektrodenschichten mittels der Isolationsschichten jeweils voneinander beabstandet sind. Mit anderen Worten liegen die Elektrodenschichten nicht in einer Ebene.

Vorzugsweise ist die Öffnung der ersten Elektrodenschicht mit Abstand zu dem Randbereich der ersten Elektrodenschicht, die Öffnung der mindestens zweiten Isolationsschicht mit Abstand zu dem Randbereich der zweiten Isolationsschicht, die Öffnung der mindestens dritten Elektrodenschicht mit Abstand zu dem Randbereich der dritten Elektrodenschicht und die Öffnung der ersten Isolationsschicht mit Abstand zu dem Randbereich der ersten Isolationsschicht ausgebildet. Die Öffnungen sind demnach vorzugsweise nicht randlagig bzw. nicht an den Seitenrändern der betreffenden Schichten ausgebildet.

Die erste Elektrodenschicht und die dritte Elektrodenschicht sind durch die dazwischen befindliche zweite Isolationsschicht voneinander isoliert. Die dritte Elektrodenschicht und die zweite Elektrodenschicht sind durch die dazwischen befindliche erste Isolationsschicht voneinander isoliert. Aufgrund eines derartigen Aufbaus kann ein sehr empfindlicher bzw. sensitiver Sensor gebildet werden, der im Vergleich zu Sensoren des Standes der Technik eine geringere Baugröße aufweist.

Die zweite, beispielsweise flächig ausgebildete, Elektrodenschicht ist mittelbar oder unmittelbar mit dem Substrat verbunden. Ein mittelbares Verbinden der zweiten Elektrodenschicht mit dem Substrat kann beispielsweise mittels eines Haftvermittlers, insbesondere einer Haftvermittlerschicht, erfolgen. Der Haftvermittler kann auch inselartig zwischen dem Substrat und der zweiten Elektrodenschicht ausgebildet sein. Beispielsweise ist ein tropfenartiges Ausbilden des Haftvermittlers/der Haftvermittlerschicht möglich. Zwischen der zweiten Elektrodenschicht und dem Substrat kann eine Haftvermittlerschicht ausgebildet sein.

Der Haftvermittler, insbesondere die Haftvermittlerschicht, kann beispielsweise aus einem Aluminiumoxid (Al₂O₃) oder einem Siliziumdioxid (SiO₂) oder einer Keramik oder einem Glas oder beliebigen Kombinationen davon bestehen. Die Haftvermittlerschicht ist vorzugsweise sehr dünn ausgebildet und weist folglich lediglich eine geringe Dicke auf.

Die erste Isolationsschicht und/oder die mindestens zweite Isolationsschicht kann bzw. können eine Dicke von 0,1 bis 50 µm, insbesondere von 1,0 µm bis 40 µm, insbesondere von 5,0 µm bis 30 µm, insbesondere von 7,5 µm bis 20 µm, insbesondere von 8 µm bis 12 µm, aufweisen. Mit Hilfe der Dicke der Isolationsschicht(en) wird der Abstand einer Elektrodenschicht zu einer weiteren Elektrodenschicht eingestellt. Die Empfindlichkeit des Sensors kann durch Verringerung des Abstandes der übereinander befindlichen, beispielsweise flächigen Elektrodenschichten erhöht werden. Je geringer die Dicke der Isolationsschicht ausgebildet ist, desto empfindlicher bzw. sensitiver ist der Sensor ausgebildet.

Des Weiteren ist es möglich, dass die Dicke(n) der Elektrodenschichten und/oder die Dicke(n) der Isolationsschicht(en) eines Substrats variieren.

Die Isolationsschicht(en) kann bzw. können aus Aluminiumoxid (Al₂O₃) oder Siliziumdioxid (SiO₂) oder Magnesiumoxid (MgO) oder Siliziumnitrid (Si₂N4) oder Glas oder Keramik oder beliebigen Kombinationen davon gebildet sein.

Vorzugsweise ummantelt die erste Isolationsschicht die zweite Elektrodenschicht seitlich. Mit anderen Worten kann die erste Isolationsschicht die Seitenflächen der zweiten Elektrodenschicht derart abdecken, dass die zweite Elektrodenschicht seitlich isoliert ist. Beispielsweise ummantelt die mindestens zweite Isolationsschicht die mindestens dritte Elektrodenschicht seitlich. Mit anderen Worten kann die zweite Isolationsschicht die Seitenflächen der dritten Elektrodenschicht derart abdecken, dass die dritte Elektrodenschicht seitlich isoliert ist.

Die erste Elektrodenschicht und/oder die zweite Elektrodenschicht und/oder die mindestens dritte Elektrodenschicht ist aus einem leitfähigen Material, insbesondere aus Metall oder einer Legierung, insbesondere aus einem hochtemperaturfesten Metall oder einer hochtemperaturfesten Legierung, besonders bevorzugt aus einem Platinmetall oder aus einer Legierung aus einem Platinmetall, gebildet. Bei den Elementen der Platinmetalle handelt es sich um Palladium (Pd), Platin (Pt), Rhodium (Rh), Osmium (Os), Iridium (Ir) und Ruthendium (Rh). Auch Unedelmetalle wie Nickel (Ni) oder Unedelmetalllegierungen wie Nickel/Chrom oder Nickel/Eisen können zum Einsatz kommen.

Es ist möglich, dass mindestens eine Elektrodenschicht aus einer leitfähigen Keramik oder einer Mischung aus Metall und Keramik gebildet ist. Beispielsweise kann mindestens eine Elektrodenschicht aus einer Mischung aus Platinkörnern (Pt) und Aluminiumoxidkörner (Al₂O₃) gebildet werden. Es ist auch möglich, dass mindestens eine Elektrodenschicht Siliciumcarbid (SiC) aufweist oder aus Siliciumcarbid (SiC) gebildet ist. Die genannten Materialien und Metalle oder Legierungen aus diesen Metallen sind besonders hochtemperaturfest und eignen sich demnach zur Bildung eines Sensorelements, das zur Detektion von Rußpartikel in einem Abgasstrom von Verbrennungsmotoren eingesetzt werden kann.

In einer weiteren Ausführungsform der Erfindung ist die zweite Elektrodenschicht aus einem leitfähigen Material, insbesondere aus einem Metall oder einer Legierung, gebildet, die eine höhere Ätzresistenz als das leitfähige Material, insbesondere das Metall oder die Legierung, der ersten Elektrodenschicht aufweist. Dies hat den Vorteil, dass die zweite Elektrodenschicht in einem Herstellprozess als den Ätzprozess stoppende Schicht ausgebildet sein kann. Mit anderen Worten kann eine derart ausgebildete zweite Elektrodenschicht die zu ätzende Tiefe eines beispielsweise in den Sensoraufbau einzubringenden Durchgangs bestimmen.

Auf der, von der ersten Isolationsschicht abgewandten Seite der ersten Elektrodenschicht kann mindestens eine Abdeckschicht, die insbesondere aus Keramik und/oder Glas und/oder Metalloxid gebildet ist, ausgebildet sein. Mit anderen Worten ist die Abdeckschicht auf einer, zur ersten Isolationsschicht gegenüberliegenden Seite der ersten Elektrodenschicht ausgebildet. Die Abdeckschicht kann als Diffusionsbarriere dienen und reduziert zusätzlich ein Abdampfen der ersten Elektrodenschicht bei hohen Temperaturen, die in einem Abgasstrom beispielsweise bis zu 850 °C betragen können.

Die mindestens eine Abdeckschicht kann die erste Elektrodenschicht seitlich ummanteln. In einer weiteren Ausführungsform der Erfindung kann die Abdeckschicht zusätzlich die mindestens zweite Isolationsschicht seitlich ummanteln. In einer weiteren Ausführungsform der Erfindung kann die Abdeckschicht zusätzlich die mindestens zweite Isolationsschicht und die mindestens dritte Elektrodenschicht seitlich ummanteln.

Es ist möglich, dass mindestens eine Abdeckschicht, die oberste Elektrodenschicht, insbesondere die erste Elektrodenschicht, nicht vollständig abdeckt. Mit anderen Worten ist es möglich, dass mindestens eine Abdeckschicht, die oberste Elektrodenschicht, insbesondere die erste Elektrodenschicht, lediglich abschnittsweise abdeckt. Sofern die oberste Elektrodenschicht als Heizschicht ausgebildet ist, ist es möglich, dass lediglich die Abschnitte der Heizschleife/Heizwendel von der mindestens einen Abdeckschicht abgedeckt/bedeckt sind.

In einer weiteren Ausführungsform der Erfindung kann die mindestens eine Abdeckschicht zusätzlich die mindestens zweite Isolationsschicht und die mindestens dritte Elektrodenschicht und die erste Isolationsschicht seitlich ummanteln. Mit anderen Worten können sowohl die Seitenflächen der ersten Elektrodenschicht als auch die Seitenflächen der darunter angeordneten Isolationsschichten und Elektrodenschichten mit mindestens einer Abdeckschicht bedeckt sein. Des Weiteren ist es denkbar, dass die Abdeckschicht zusätzlich die zweite Elektrodenschicht seitlich ummantelt. Der seitliche Ummantelungsteil bzw. seitliche Ummantelungsbereich der Abdeckschicht kann demnach von der ersten Elektrodenschicht bis zur zweiten Elektrodenschicht reichen. Dies bewirkt eine seitliche Isolierung der ersten Elektrodenschicht und/oder der Isolationsschichten und/oder der mindestens dritte Elektrodenschicht und/oder der zweiten Elektrodenschicht.

Auf der von der ersten Isolationsschicht abgewandten Seite der ersten Elektrodenschicht oder auf der von der ersten Elektrodenschicht abgewandten Seite der Abdeckschicht kann zusätzlich mindestens eine poröse Filterschicht ausgebildet sein. Mit Hilfe einer derartigen porösen Filterschicht können der Anordnung von mindestens zwei, insbesondere von mindestens drei, übereinander angeordneten Elektrodenschichten große Partikelteile ferngehalten werden. Die Porengrößen der Filterschicht kann beispielsweise > 1 µm betragen. Besonders bevorzugt ist die Porengröße in einem Bereich von 20 µm bis 30 µm ausgebildet. Die poröse Filterschicht kann beispielsweise aus einem keramischen Material gebildet sein. Des Weiteren ist es denkbar, dass die poröse Filterschicht aus einem Aluminiumoxidschaum gebildet ist. Mit Hilfe der Filterschicht, die auch den mindestens einen Durchgang zur zweiten Elektrodenschicht bedeckt, können die, die Messung störende große Partikel, insbesondere Rußpartikel, von dem mindestens einen Durchgang ferngehalten werden, sodass derartige Partikel keinen Kurzschluss verursachen können.

Der mindestens eine Durchgang zur zweiten Elektrodenschicht kann beispielsweise als Sackloch ausgebildet sein, wobei ein Abschnitt der zweiten Elektrodenschicht als Boden des Sacklochs ausgebildet ist und sich das Sackloch mindestens über die erste Isolationsschicht, über die mindestens dritte Elektrodenschicht, über die mindestens zweite Isolationsschicht und über die erste Elektrodenschicht erstreckt. Sofern der Sensor eine Abdeckschicht aufweist, erstreckt sich das Sackloch auch über diese Abdeckschicht. Mit anderen Worten weisen dann sowohl die erste Elektrodenschicht als auch die mindestens zweite Isolationsschicht, die mindestens dritte Elektrodenschicht und die erste Isolationsschicht und die Abdeckschicht eine Öffnung auf, wobei diese Öffnungen derart übereinander angeordnet sind, dass diese ein Sackloch bilden, dessen Boden durch einen Abschnitt der zweiten Elektrodenschicht gebildet ist. Der Boden des Sacklochs kann beispielsweise auf der zur ersten Isolationsschicht zugewandten oberen Seite der zweiten Elektrodenschicht ausgebildet sein. Des Weiteren ist es denkbar, dass die zweite Elektrodenschicht eine Vertiefung aufweist, die den Boden des Sackloches bildet.

Der Öffnungsquerschnitt des Sackloches wird durch die, die Öffnungen begrenzenden Randabschnitte der ersten Elektrodenschicht, der mindestens zweiten Isolationsschicht, der mindestens dritten Elektrodenschicht und der ersten Isolationsschicht und ggf. der Abdeckschicht gebildet. Der Öffnungsquerschnitt des mindestens einen Sackloches kann rund oder quadratisch oder rechteckig oder linsenförmig oder wabenförmig oder vieleckig oder dreieckig oder hexagonal sein. Auch andersartige Ausgestaltungen, insbesondere Freiformen, sind denkbar.

Beispielsweise ist es möglich, dass das Sackloch einen quadratischen Querschnitt mit einer Fläche von 3 x 3 µm² bis 150 x 150 µm², insbesondere von 10 x 10 µm² bis 100 x 100 µm², insbesondere von 15 x 15 µm² bis 50 x 50 µm², insbesondere von 20 x 20 µm², aufweist.

In einer Weiterbildung der Erfindung kann der Sensor eine Vielzahl von Durchgängen, insbesondere Sacklöchern, aufweisen, wobei diese Sacklöcher wie bereits beschrieben ausgebildet sind. Des Weiteren ist es denkbar, dass mindestens zwei Durchgänge, insbesondere mindestens zwei Sacklöcher, unterschiedliche Querschnitte, insbesondere unterschiedliche Querschnittsgrößen, aufweisen, so dass ein Sensor-Array mit mehreren Feldern gebildet werden kann, bei dem mehrere Messzellen mit unterschiedlich großen Sackloch-Querschnitten verwendet werden können. Durch parallele Detektion von Rußpartikel, können zusätzliche Informationen zur Größe der Partikel bzw. zur Größenverteilung der Partikel gewonnen werden.

In einer weiteren Ausführungsform der Erfindung können die Öffnungen der ersten Isolationsschicht, der mindestens dritten Elektrodenschicht, der mindestens zweiten Isolationsschicht, und der ersten Elektrodenschicht jeweils linienförmig oder jeweils mäandrierend oder jeweils gitterförmig oder jeweils spiralförmig ausgebildet sein. Mit anderen Worten sind eine Öffnung der ersten Isolationsschicht, eine Öffnung der mindestens dritten Elektrodenschicht, eine Öffnung der mindestens zweiten Isolationsschicht, und eine Öffnung der ersten Elektrodenschicht jeweils linienförmig oder jeweils mäandrierend oder jeweils spiralförmig oder jeweils gitterförmig ausgebildet. Die Öffnungen der einzelnen Schichten sind vorzugsweise gleichartig ausgebildet, sodass ein Durchgang gebildet werden kann. Die Öffnungen müssen nicht zwangsläufig exakt übereinstimmende Querschnitte bzw. exakt übereinstimmende Querschnittsgrößen aufweisen. Es ist möglich, dass die Querschnitte der Öffnungen beginnend von der zweiten Elektrodenschicht in Richtung der ersten Elektrodenschicht jeweils größer werden. Die Grundformen der Öffnungen sind vorzugsweise gleichartig ausgebildet, sodass alle Öffnungen entweder linienförmig oder mäandrierend oder spiralförmig oder gitterförmig ausgebildet sind.

In einer weiteren Ausführungsform der Erfindung ist es möglich, dass der Sensor mehrere Durchgänge aufweist, die linienförmig und/oder mäandrierend und/oder spiralförmig und/oder gitterförmig ausgebildet sind.

Sofern die zweite Elektrodenschicht eine Mäanderform oder eine Schleifenform aufweist, ist der mindestens eine Durchgang des Sensors derart ausgebildet, dass der Durchgang nicht in einer Lücke bzw. einer Öffnung der Mäanderform oder der Schleifenform endet. Der mindestens eine Durchgang des Sensors ist derart ausgebildet, dass ein Abschnitt der zweiten Elektrodenschicht den Boden des Durchgangs bildet.

Des Weiteren ist es möglich, dass der mindestens eine Durchgang als längliche Vertiefung ausgebildet ist, wobei ein Abschnitt der zweiten Elektrodenschicht als Boden der länglichen Vertiefung ausgebildet ist und sich die längliche Vertiefung mindestens über die erste Isolationsschicht, über die mindestens dritte Elektrodenschicht, über die mindestens zweite Isolationsschicht, und über die erste Elektrodenschicht und über eine/die optional ausgebildete Abdeckschicht erstreckt.

Die längliche Vertiefung kann auch als Graben und/oder Rille und/oder Kanal bezeichnet werden.

In einer weiteren Ausführungsform der Erfindung ist es möglich, dass der Sensor sowohl mindestens einen Durchgang in Form eines Sacklochs, das rund und/oder quadratisch und/oder rechteckig und/oder linsenförmig und/oder wabenförmig und/oder vieleckig und/oder dreieckig und/oder hexagonal ausgebildet ist, als auch mindestens einen Durchgang in Form einer länglichen Vertiefung, die linienförmig und/oder mäandrierend und/oder spiralförmig und/oder gitterförmig ausgebildet ist, umfasst.

In einer weiteren Ausführungsform der Erfindung ist die erste Elektrodenschicht, die mindestens zweite Isolationsschicht, die mindestens dritte Elektrodenschicht und die erste Isolationsschicht jeweils porös ausgebildet, wobei die mindestens eine Öffnung der ersten Elektrodenschicht, die mindestens eine Öffnung der mindestens zweiten Isolationsschicht, die mindestens eine Öffnung der mindestens dritten Elektrodenschicht, und die mindestens eine Öffnung der ersten Isolationsschicht jeweils aus mindestens einer Pore gebildet ist, wobei die Pore der ersten Isolationsschicht, die Pore der mindestens dritten Elektrodenschicht, die Pore der mindestens zweiten Isolationsschicht und die Pore der ersten Elektrodenschicht zumindest abschnittsweise derart übereinander angeordnet sind, dass der mindestens eine Durchgang zur zweiten Elektrodenschicht gebildet ist. Mit anderen Worten kann auf eine aktive bzw. nachträgliche Strukturierung der Durchgänge verzichtet werden, wobei die erste und mindestens dritte Elektrodenschicht und die erste und mindestens zweite Isolationsschicht für das zu messende Medium durchlässig ausgebildet ist.

Dies kann beispielsweise durch einen porösen bzw. grobkörnigen Aufbau der Schichten ermöglicht werden. Sowohl die Elektrodenschichten als auch die Isolationsschichten können durch Zusammensintern einzelner Partikel hergestellt werden, wobei Poren bzw. Hohlräume für das zu messende Medium beim Zusammensintern gebildet werden. Die zweite Elektrodenschicht ist vorzugsweise nicht porös ausgebildet. Es muss demnach ausgehend von der Seite der ersten Elektrodenschicht, die von der ersten Isolationsschicht abgewandt ist, bis zur Seite der zweiten Elektrodenschicht, die der Isolationsschicht zugewandt ist, aufgrund der übereinander ausgebildeten Anordnung von Poren der Elektrodenschichten, insbesondere der ersten und der mindestens dritten Elektrodenschicht, und der Isolationsschichten mindestens ein Durchgang gebildet sein, der einen Zugang eines zu messenden bzw. detektierenden Partikels zur zweiten Elektrodenschicht ermöglicht. Sofern der Sensor eine Abdeckschicht aufweist, ist auch diese Abdeckschicht vorzugsweise porös auszubilden, derart, dass eine Pore der Abdeckschicht, eine Pore der ersten Elektrodenschicht, eine Pore der zweiten Isolationsschicht, eine Pore der dritten Elektrodenschicht und eine Pore der ersten Isolationsschicht einen Durchgang zur zweiten Elektrodenschicht bilden.

Die Porengrößenverteilung und ihre Anzahl in der ersten und dritten Elektrodenschicht und/oder der ersten und zweiten Isolationsschicht und/oder der Abdeckschicht(en) kann/können hinsichtlich der durchzuführenden Mess- oder Detektionsaufgabe optimiert werden.

Die erste und/oder dritte Elektrodenschicht und/oder die erste und/oder zweite Isolationsschicht und ggf. die mindestens eine Abdeckschicht kann bzw. können Abschnitte mit unterschiedlichen Porengrößen aufweisen, derart, dass ein Sensor-Array mit mehreren Feldern unterschiedlicher Porengrößen gebildet ist. Durch parallele Detektion mit Schichtabschnitten unterschiedlicher Porengröße kann ein "Fingerabdruck" des zu analysierenden bzw. des zu detektierenden Mediums gemessen werden. Demnach können weitere Informationen zur Größe der zu messenden Partikel bzw. zur Größenverteilung der zu messenden Partikel erlangt werden.

Die erste Elektrodenschicht, die zweite Elektrodenschicht und die mindestens dritte Elektrodenschicht weisen jeweils eine elektrische Kontaktierungsfläche auf, die frei von über den jeweiligen Elektrodenschichten angeordneten Sensorschichten sind und jeweils an ein Anschlusspad angeschlossen oder anschließbar sind. Die Elektrodenschichten sind isoliert voneinander an Anschlusspads angeschlossen bzw. anschließbar. Es wird pro Elektrodenschicht mindestens eine elektrische Kontaktierungsfläche gebildet, die im Bereich der Anschlusspads zur elektrischen Kontaktierung freigelegt ist. Die elektrische Kontaktierungsfläche der ersten Elektrodenschicht ist frei von einer möglichen Abdeckschicht und frei von einer passiven porösen Filterschicht. Mit anderen Worten befindet sich oberhalb der elektrischen Kontaktierungsfläche der ersten Elektrodenschicht weder ein Abschnitt der Abdeckschicht noch ein Abschnitt der Filterschicht.

Die elektrische Kontaktierungsfläche der zweiten oder mindestens dritten Elektrodenschicht ist frei von Isolationsschichten, frei von Elektrodenschichten, sowie frei von einer ggf. ausgebildeten Abdeckschicht und frei von einer passiven porösen Filterschicht. Mit anderen Worten befindet sich auf der elektrischen Kontaktierungsfläche der zweiten oder mindestens dritten Elektrodenschicht weder ein Abschnitt einer Isolationsschicht noch ein Abschnitt einer Elektrodenschicht, noch ein Abschnitt der passiven porösen Filterschicht.

In einer weiteren Ausführungsform der Erfindung weist die erste Elektrodenschicht und/oder die zweite Elektrodenschicht und/oder die mindestens dritte Elektrodenschicht Leiterbahnschleifen auf, derart, dass die erste Elektrodenschicht und/oder die zweite Elektrodenschicht und/oder die mindestens dritte Elektrodenschicht als Heizwendel und/oder als temperatursensitive Schicht und/oder als Schirmelektrode ausgebildet ist. Die erste Elektrodenschicht und/oder die zweite Elektrodenschicht und/oder die mindestens dritte Elektrodenschicht weist mindestens eine zusätzliche elektrische Kontaktierungsfläche auf, die frei von über der Elektrodenschicht, also der ersten und/oder der zweiten und/oder der mindestens dritten Elektrodenschicht, angeordneten Sensorschichten ist und an ein zusätzliches Anschlusspad angeschlossen oder anschließbar ist. Mit anderen Worten weist die erste Elektrodenschicht und/oder die zweite Elektrodenschicht und/oder die mindestens dritte Elektrodenschicht zwei elektrische Kontaktierungsflächen auf, wobei beide elektrische Kontaktierungsflächen frei von über der Elektrodenschicht angeordneten Sensorschichten sind.

Die Ausbildung von zwei elektrischen Kontaktierungsflächen auf einer Elektrodenschicht ist dann notwendig, wenn diese Elektrodenschicht als Heizwendel und/oder temperatursensitive Schicht und/oder als Schirmelektrode ausgebildet ist. Vorzugsweise weist die zweite und/oder die mindestens dritte Elektrodenschicht mindestens zwei elektrische Kontaktierungsflächen auf. Die zweite und/oder die mindestens dritte Elektrodenschicht ist vorzugsweise sowohl als Heizwendel als auch als temperatursensitive Schicht und als Schirmelektrode ausgebildet. Durch entsprechendes elektrisches Kontaktieren der elektrischen Kontaktierungsfläche kann die Elektrodenschicht entweder heizen oder als temperatursensitive Schicht bzw. Schirmelektrode fungieren. Aufgrund einer derartigen Ausbildung der Elektrodenflächen können kompakte Sensoren bereitgestellt werden, da eine Elektrodenschicht mehrere Funktionen übernehmen kann. Es sind demnach keine separaten Heizwendelschichten und/oder temperatursensitive Schichten und/oder Schirmelektrodenschichten notwendig.

Beim Heizen mindestens einer Elektrodenschicht können gemessene Partikel bzw. in einem Durchgang des Sensors befindliche Partikel beispielsweise weggebrannt bzw. abgebrannt werden.

Zusammenfassend kann festgestellt werden, dass bedingt durch den erfindungsgemäßen Aufbau ein sehr genau messender Sensor zur Verfügung gestellt werden kann. Durch das Ausbilden einer/mehrerer dünn(er) Isolationsschichten kann die Empfindlichkeit des Sensor wesentlich erhöht werden.

Außerdem kann der erfindungsgemäße Sensor wesentlich kleiner als bekannte Sensoren konstruiert werden. Durch die Ausbildung des Sensors in einem dreidimensionalen Raum, können mehrere Elektrodenschichten und/oder mehrere Isolationsschichten als kleinerer Sensor gebaut werden. Des Weiteren können bei der Herstellung des Sensors wesentlich mehr Einheiten auf einem Substrat oder einem Wafer ausgebildet werden. Dieser Aufbau geht somit mit einem erheblichen Kostenvorteil gegenüber normalerweise planar aufgebauten Strukturen einher.

Ein weiterer Vorteil des erfindungsgemäßen Sensors besteht darin, dass die Querschnitte der Durchgänge derart bemessen werden können, dass bestimmte Partikel mit bestimmten Größen nicht in die Durchgänge gelangen können. Außerdem ist es möglich, dass die Querschnitte mehrerer Durchgänge unterschiedliche Größen aufweisen können, sodass der Zugang in einzelne Durchgänge nur bestimmten Partikeln mit entsprechenden Partikelgrößen ermöglicht wird.

Bei bekannten Sensoren sind die Sensoren in einer Ebene angeordnet und greifen ineinander. Das Ineinandergreifen der Elektrodenstrukturen ist bei dem vorliegenden Sensor nicht nötig, da aufgrund der Ausbildung von Isolationsschichten zwischen den Elektrodenschichten, die einzelnen Elektrodenschichten voneinander beabstandet ausgebildet werden. Die Elektrodenschichten des erfindungsgemäßen Sensors sind nicht miteinander verbunden, sondern liegen, getrennt durch mindestens eine Isolationsschicht, übereinander. Es liegt eine "non continuous loop" zwischen mindestens einer ersten und mindestens einer zweiten Elektrodenschicht vor. Die mindestens drei Elektrodenschichten sind nicht miteinander oder ineinander verschlungen. Erst durch einen, in mindestens einem Durchgang befindlichen, Rußpartikel können mindestens zwei Elektrodenschichten elektrisch miteinander verbunden werden.

Mit Hilfe von mindestens drei ausgebildeten Elektrodenschichten kann bei einer Messung von Partikel beispielsweise auf die Partikelgröße geschlossen werden, bzw. die Partikelgröße detektiert werden. Überbrückt ein Partikel nur zwei übereinander angeordnete Elektrodenschichten, ist die Größe des Partikels kleiner als eines Partikels, der mehr als zwei Elektrodenschichten überbrückt. Auch durch unterschiedliche Ausbildungen der Dicke der Isolationsschichten kann auf die Größe der Partikel geschlossen werden.

Gemäß einem nebengeordneten Aspekt betrifft die Erfindung ein Sensorsystem, umfassend mindestens einen erfindungsgemäßen Sensor und mindestens eine Steuerung, insbesondere mindestens eine Steuerschaltung, die derart ausgebildet ist, dass der Sensor in einem Messmodus und/oder in einem Reinigungsmodus und/oder in einem Überwachungsmodus betreibbar ist.

Der erfindungsgemäße Sensor und/oder das erfindungsgemäße Sensorsystem kann mindestens eine Hilfselektrode aufweisen. Zwischen einer Hilfselektrode und einer Elektrodenschicht und/oder zwischen einer Hilfselektrode und einem Bauteil des Sensorsystems, insbesondere des Sensorgehäuses, kann ein derartiges elektrisches Potential angelegt werden, dass die zu messenden Partikel vom Sensor und/oder dem Sensorsystem elektrisch angezogen bzw. angesaugt werden. Vorzugsweise wird an die mindestens eine Hilfselektrode und an mindestens eine Elektrodenschicht eine derartige Spannung angelegt, dass Partikel, insbesondere Rußpartikel, in den mindestens einen Durchgang "eingesaugt" werden.

Der erfindungsgemäße Sensor ist vorzugsweise in einem Sensorgehäuse angeordnet. Das Sensorgehäuse kann beispielsweise eine längliche Rohrform aufweisen. Das erfindungsgemäße Sensorsystem kann demnach auch ein Sensorgehäuse umfassen.

Vorzugsweise ist der Sensor und/oder der Sensor in dem Sensorgehäuse und/oder das Sensorgehäuse derart ausgebildet und/oder angeordnet, dass der Sensor, insbesondere die oberste bzw. die vom Substrat am entferntesten angeordnete Schicht des Sensors, schräg zur Strömungsrichtung des Fluids angeordnet ist. Die Strömung trifft dabei nicht senkrecht auf die Ebene der Elektrodenschichten auf. Vorzugsweise beträgt der Winkel α zwischen der Normalen auf der Ebene der ersten Elektrodenschicht und der Strömungsrichtung der Partikel mindestens 1 Grad, bevorzugt mindestens 10 Grad, besonders bevorzugt mindestens 30 Grad. Weiterhin ist eine Orientierung des Sensors bevorzugt, in der der Winkel β zwischen der Strömungsrichtung der Partikel und der Längsachse von beispielsweise länglichen Vertiefungen zwischen 20 und 90 Grad liegt. Die zu detektierenden Partikel gelangen in dieser Ausführungsform leichter in die Durchgänge, insbesondere in Sacklöcher oder längliche Vertiefungen, des Sensors und erhöhen damit die Empfindlichkeit.

Die Steuerung, insbesondere die Steuerschaltung, ist vorzugsweise derart ausgebildet, dass die Elektrodenschichten des Sensors miteinander verschaltet sind. An die Elektrodenschichten bzw. einzelne Elektrodenschichten können derartige Spannungen angelegt werden, dass der Sensor in einem Messmodus und/oder in einem Reinigungsmodus und/oder in einem Überwachungsmodus betreibbar ist.

Gemäß einem nebengeordneten Aspekt betrifft die Erfindung ein Verfahren zur Steuerung eines erfindungsgemäßen Sensors und/oder eines erfindungsgemäßen Sensorsystems.

Aufgrund des erfindungsgemäßen Verfahrens kann der Sensor wahlweise in einem Messmodus und/oder in einem Reinigungsmodus und/oder in einem Überwachungsmodus betrieben werden.

Im Messmodus kann bzw. können eine Änderung des elektrischen Widerstands zwischen den Elektrodenschichten bzw. zwischen mindestens zwei Elektrodenschichten des Sensors und/oder eine Änderung der Kapazitäten der Elektrodenschichten gemessen werden.

Mit Hilfe des erfindungsgemäßen Verfahrens können Partikel aufgrund einer gemessenen Widerstandsänderung zwischen den Elektrodenschichten und/oder durch eine Messung der Impedanzänderung und/oder durch eine Messung der Kapazität der Elektrodenschicht(en) detektiert bzw. gemessen werden. Vorzugsweise wird eine Widerstandsänderung zwischen den Elektrodenschichten gemessen.

Im Messmodus kann eine elektrische Widerstandsmessung, also eine Messung nach dem resistiven Prinzip, durchgeführt werden. Hierbei wird der elektrische Widerstand zwischen zwei Elektrodenschichten gemessen, wobei der elektrische Widerstand abnimmt, wenn ein Partikel, insbesondere ein Rußpartikel, mindestens zwei Elektrodenschichten, die als elektrische Leiter wirken, verbrückt. Grundsätzlich gilt im Messmodus, dass durch Anlegen verschiedener Spannungen an den Elektrodenschichten verschiedene Eigenschaften der zu messenden Partikel, insbesondere von Rußpartikel, detektiert werden können. Beispielsweise können die Partikelgröße und/oder der Partikeldurchmesser und/oder die elektrische Aufladung und/oder die Polarisierbarkeit des Partikels bestimmt werden.

Sofern mindestens eine Elektrodenschicht auch als Heizwendel bzw. Heizschicht verwendet wird bzw. beschaltbar ist, kann eine elektrische Widerstandsmessung zusätzlich dazu dienen, den Zeitpunkt der Aktivierung der Heizwendel bzw. Heizschicht zu bestimmen. Die Aktivierung der Heizwendel bzw. Heizschicht entspricht einem durchzuführenden Reinigungsmodus.

Vorzugsweise deutet ein Abnehmen des elektrischen Widerstands zwischen mindestens zwei Elektrodenschichten darauf hin, dass Partikel, insbesondere Rußpartikel, auf bzw. zwischen den Elektroden(schichten) abgeschieden wurden. Sobald der elektrische Widerstand einen unteren Schwellenwert erreicht, erfolgt das Aktivieren der Heizwendel bzw. Heizschicht. Die Partikel werden mit anderen Worten abgebrannt. Mit steigender Anzahl abgebrannter Partikel bzw. eines abgebrannten Partikelvolumens steigt der elektrische Widerstand. Das Abbrennen wird vorzugsweise derart lang durchgeführt, bis ein oberer elektrischer Widerstandswert gemessen wird. Mit dem Erreichen eines oberen elektrischen Widerstandswerts wird auf einen regenerierten bzw. gereinigten Sensor geschlossen. Anschließend kann ein neuer Messzyklus beginnen bzw. durchgeführt werden.

Alternativ oder zusätzlich ist es möglich eine Änderung der Kapazitäten der Elektrodenschichten zu messen. Eine zunehmende Beladung der Anordnung von Elektrodenschichten führt zu einem Anstieg der Kapazität der Elektrodenschichten. Die Anordnung von Partikel, insbesondere Rußpartikel, in mindestens einem Durchgang des Sensors führt zu einer Ladungsverschiebung bzw. einer Veränderung der Permettivität (ε), die zu einer Erhöhung der Kapazität (C) führt. Grundsätzlich gilt: C= (ε x A)/d, wobei A für die aktive Elektrodenfläche der Elektrodenschicht und d für den Abstand zwischen zwei Elektrodenschichten steht.

Die Messung der Kapazität kann beispielhaft durchgeführt werden durch:
- Bestimmen der Spannungsanstiegsgeschwindigkeit bei einem konstanten Strom und/oder
- Anlegen einer Spannung und Bestimmen des Ladestroms und/oder
- Anlegen einer Wechselspannung und Messen des Stromverlaufs und/oder
- Bestimmen der Resonanzfrequenz mittels eines LC-Schwingkreises.

Die beschriebene Messung der Änderung der Kapazitäten der Elektrodenschichten kann auch im Zusammenhang mit einem durchzuführenden Überwachungsmodus durchgeführt werden.

Gemäß der OBD (On Board Diagnose)-Verordnung müssen alle abgasrelevanten Teile und Komponenten auf Funktion überprüft werden. Die Funktionsüberprüfung ist beispielsweise direkt nach dem Starten bzw. Anlassen eines Kraftfahrzeugs durchzuführen.

Beispielsweise kann mindestens eine Elektrodenschicht zerstört sein, wobei dies mit einer Reduzierung der aktiven Elektrodenfläche A einhergeht. Da die aktive Elektrodenfläche A direkt proportional zu Kapazität C ist, nimmt die gemessene Kapazität C einer zerstörten Elektrodenschicht ab.

Im Überwachungsmodus ist es alternativ oder zusätzlich möglich, die Elektrodenschichten als Leiterkreise auszubilden. Die Leiterkreise können als geschlossene oder offene Leiterkreise ausgebildet sein, die bei Bedarf, z.B. durch einen Schalter, geschlossen werden können. Außerdem ist es möglich die Elektrodenschichten über mindestens einen Schalter zu mindestens einem Leiterkreis zu schließen, wobei im Überwachungsmodus überprüft wird, ob durch den mindestens einen Leiterkreis ein Test- bzw. Prüfstrom fließt. Sofern eine Elektrodenschicht einen Riss oder ein Beschädigung aufweist bzw. zerstört ist würde kein Test- bzw. Prüfstrom fließen.

Gemäß einem nebengeordneten Aspekt betrifft die Erfindung ein Verfahren zum Herstellen eines Sensors zur Detektion elektrisch leitfähiger und/oder polarisierbarer Partikel, insbesondere ein Verfahren zum Herstellen eines beschriebenen erfindungsgemäßen Sensors.

Das Verfahren umfasst, dass ein Schichtverbund mit einer ersten Elektrodenschicht, einer zweiten Elektrodenschicht, einer zwischen der ersten Elektrodenschicht und der zweiten Elektrodenschicht angeordneten ersten Isolationsschicht, mindestens einer zwischen der ersten Isolationsschicht und der ersten Elektrodenschicht angeordneten dritten Elektrodenschicht und mindestens einer zwischen der dritten Elektrodenschicht und der ersten Elektrodenschicht angeordneten zweiten Isolationsschicht, hergestellt wird, wobei in den Schichtverbund anschließend mindestens ein Durchgang eingebracht wird, der sich über die erste Elektrodenschicht, die mindestens zweite Isolationsschicht, die mindestens dritte Elektrodenschicht, und die erste Isolationsschicht erstreckt, wobei der Boden des Durchgangs durch einen Abschnitt der zweiten Elektrodenschicht gebildet wird.

Das Verfahren beruht auch auf dem Gedanken, einen Schichtverbund, der mindestens drei Elektrodenschichten und zwei Isolationsschichten umfasst, herzustellen, um in diesen Schichtverbund mindestens einen Durchgang einzubringen. Der Durchgang dient als Zugang der zu detektierenden Partikel, insbesondere Rußpartikel, zu der zweiten Elektrodenschicht.

Die Herstellung der Schichtverbunds und/oder der einzelne Schichten des Schichtverbundes kann durch eine Dünnschichttechnik oder eine Dickschichttechnik bzw. einer Kombination aus diesen Techniken erfolgen. Im Rahmen einer anzuwendenden Dünnschichttechnik kann ein Aufdampfverfahren oder vorzugsweise ein Kathodenzerstäubungsverfahren gewählt werden. Im Rahmen eines Dickschichtverfahrens ist insbesondere ein Siebdruckverfahren denkbar.

Mindestens eine Isolationsschicht und/oder mindestens eine Abdeckschicht, die auf der von der ersten Isolationsschicht abgewandten Seite der ersten Elektrodenschicht ausgebildet ist, kann durch eine chemische Gasphasenabscheidung (CVD-Prozess) oder eine plasmaunterstützte chemische Gasphasenabscheidung (PECVD-Prozess) gebildet werden.

Die erste Isolationsschicht kann derart hergestellt werden, dass diese die zweite Elektrodenschicht seitlich ummantelt. Eine optional vorhandene Abdeckschicht kann ebenfalls derart hergestellt werden, dass diese die erste Elektrodenschicht und/oder die mindestens zweite Isolationsschicht und/oder die mindestens dritte Elektrodenschicht und/oder die erste Isolationsschicht und/oder die zweite Elektrodenschicht seitlich ummantelt. Demnach können sowohl mindestens eine der Isolationsschichten als auch mindestens eine/die Abdeckschicht eine zusätzliche seitliche Ummantelung bilden.

Der Durchgang kann beispielsweise als Sackloch oder als längliche Vertiefung ausgebildet werden, wobei das mindestens eine Sackloch oder ein Teilabschnitt des Sacklochs oder die mindestens eine längliche Vertiefung oder ein Teilabschnitt der länglichen Vertiefung durch mindestens ein Abtrag- oder Ätzverfahren, insbesondere durch ein Plasma-Ionen-Ätzverfahren, oder durch mehrere nacheinander durchgeführte Abtrag- oder Ätzverfahren, die auf die jeweils zu ätzende oder abzutragende Schicht des Schichtverbunds angepasst ist, in den Schichtverbund eingebracht wird.

Mit anderen Worten kann ein Sackloch oder eine längliche Vertiefung derart in den Schichtverbund eingebracht werden, dass beispielsweise für jede zu durchdringende bzw. zu ätzende oder abzutragende Schicht ein für diese Schicht optimales Verfahren angewendet wird und somit mehrere nacheinander durchzuführende Ätz- oder Abtragschritte durchgeführt werden.

Des Weiteren ist es denkbar, dass das Sackloch oder ein Teilabschnitt des Sacklochs oder die längliche Vertiefung oder ein Teilabschnitt der länglichen Vertiefung in einem chemischen Ätzprozess aus der flüssigen oder der gasförmigen Phase erfolgen kann. Die erste Elektrodenschicht besteht vorzugsweise aus einem Metall, insbesondere einer Platinschicht, die relativ leicht durchzuätzen bzw. zu ätzen ist.

In einer möglichen Ausführungsform des erfindungsgemäßen Verfahrens ist es möglich, dass der Ätzvorgang bei der zweiten Elektrodenschicht stoppt, sofern die zweite Elektrodenschicht aus einem, im Vergleich zur ersten und dritten Elektrodenschicht und zu den Isolationsschichten ätzresistenteren Material hergestellt ist. Sofern der Schichtverbund bzw. der Sensor eine zusätzliche Abdeckschicht umfasst, weist die zweite Elektrodenschicht auch im Vergleich zu dieser Abdeckschicht ein ätzresistenteres Material auf. Beispielsweise ist die zweite Elektrodenschicht aus einer Platin-Titan-Legierung (Pt/Ti) hergestellt. Des Weiteren ist es denkbar, dass die zweite Elektrodenschicht aus einer mit Metalloxiden gefüllten Schicht besteht.

In einer weiteren Ausführungsform des erfindungsgemäßen Verfahrens ist es möglich, dass die erste Isolationsschicht und/oder die mindestens zweite Isolationsschicht als eine den Ätzprozess stoppende Schicht ausgebildet ist und in einem weiteren Schritt ein Teilabschnitt des Sacklochs oder ein Teilabschnitt der länglichen Vertiefung in die erste Isolationsschicht und/oder die mindestens zweite Isolationsschicht durch einen Tempervorgang bzw. einen Temperschritt mit Phasenumwandlung der ersten Isolationsschicht und/oder der mindestens zweiten Isolationsschicht eingebracht wird.

In einer weiteren Ausführungsform des erfindungsgemäßen Verfahrens ist es möglich, dass der mindestens eine Durchgang und/oder ein Durchgang als Sackloch oder als längliche Vertiefung ausgebildet wird und dieses Sackloch oder das mindestens eine Sackloch oder ein Teilabschnitt des Sacklochs oder diese längliche Vertiefung oder die mindestens eine längliche Vertiefung oder ein Teilabschnitt der länglichen Vertiefung durch ein Bestrahlungsverfahren mit elektromagnetischen Wellen oder geladenen Teilchen (Elektronen) in den Schichtverbund eingebracht wird, wobei die Strahlungsquelle und/oder die Wellenlänge und/oder die Pulsfrequenz der Strahlung an die jeweils zu bearbeitende Schicht des Schichtverbunds angepasst wird.

Vorzugsweise ist es möglich, dass der mindestens eine Durchgang und/oder ein Durchgang als Sackloch oder als längliche Vertiefung ausgebildet wird und dieses Sackloch oder das mindestens eine Sackloch oder ein Teilabschnitt des Sacklochs oder diese längliche Vertiefung oder die mindestens eine längliche Vertiefung oder ein Teilabschnitt der länglichen Vertiefung durch ein Laserbearbeitungsverfahren, insbesondere mittels Ultrakurzpulslaser, in den Schichtverbund eingebracht wird, wobei die Laserquelle und/oder die Wellenlänge und/oder die Pulsfrequenz des Lasers und/oder die Energie der geladenen Teilchen und/oder Art der geladenen Teilchen an die jeweils zu bearbeitende Schicht des Schichtverbunds angepasst wird. Besonders bevorzugst handelt es sich bei einem Ultrakurzpulslaser um einen Femtolaser oder um einen Picolaser.

Eine Möglichkeit zur Herstellung des Durchgangs, der als Sackloch oder als längliche Vertiefung ausgebildet wird, ist folglich der partielle Abtrag des Schichtverbunds mittels eines Lasers. Es können Laserquellen mit unterschiedlichen, jeweils auf das abzutragende Material abgestimmten Wellenlängen und/oder Pulsfrequenzen zum Einsatz kommen. Eine derartige Vorgehensweise hat den Vorteil, dass die jeweils einzelnen Laserbearbeitungsschritte durch Abstimmung auf das Material der abzutragenden Schicht schnell durchführbar sind, so dass sich insgesamt ein verbessertes Einbringen von Durchgängen und/oder Sacklöchern und/oder länglichen Vertiefungen in den Schichtverbund ergibt. Als besonders vorteilhaft erweist sich die Verwendung eines Ultrakurzpuls-Lasers.

Neben elektromagnetischer Strahlung sind aber auch geladene oder ungeladene Teilchen zur Abtragung der Elektroden- und/oder Isolationsschichten einsetzbar. So können neben Elektronenstrahlen auch andere geladene oder ungeladene Teilchen zur Ablation eingesetzt werden. Dies kann mit oder ohne Masken, die die zu übertragende Strukturinformation enthalten, durchgeführt werden.

In einer weiteren Ausführungsform des erfindungsgemäßen Verfahrens ist es möglich, dass die erste Isolationsschicht und/oder die mindestens zweite Isolationsschicht beim Herstellen des Schichtverbunds ganzflächig, insbesondere durch ein Siebdruckverfahren oder Aufsprühverfahren oder Tauchverfahren oder Spin-Coating-Verfahren, zwischen der zweiten Elektrodenfläche und der mindestens dritten Elektrodenfläche oder zwischen der mindestens dritten Elektrodenfläche und der ersten Elektrodenfläche erzeugt wird und in einem anschließenden Verfahrensschritt mindestens ein Abschnitt der ersten Isolationsschicht und/oder der mindestens zweiten Isolationsschicht, insbesondere durch strukturiertes Auflösen oder Ätzen oder Ausbrennen, entfernt wird, derart, dass der Durchgang im Sensor gebildet wird.

Ein derartiges Verfahren entspricht dem Prinzip der verlorenen Form. Demnach ist es möglich, gerade bei temperaturstabilen Materialien, mit dem Prinzip der verlorenen Form zu strukturieren. Eine verlorene Form dient zur Erzeugung eines Durchgangs von der ersten Elektrodenschicht zur zweiten Elektrodenschicht. Die mindestens eine Isolationsschicht bzw. isolierende Schicht aus einem temperaturstabilen Material wird zwischen den Elektrodenschichten erzeugt, wobei ein Abschnitt dieser Isolationsschicht vorzugsweise nach dem Aufbringen der ersten Elektrodenschicht durch Auflösen oder Ätzen oder Ausbrennen entfernt wird. Aufgrund dessen wird auch die darüber befindliche erste Elektrodenschicht entfernt. Sofern eine Abdeckschicht ausgebildet wird, wird auch der über dem entfernten Abschnitt der Isolationsschicht befindliche Abschnitt der Abdeckschicht durch das Auflösen oder Ätzen oder Ausbrennen des Isolationsschichtabschnittes entfernt.

Vorzugsweise wird nach dem Einbringen eines Durchgangs und/oder eines Sacklochs und/oder einer länglichen Vertiefung in den Schichtverbund mindestens eine passive poröse Filterschicht auf der Abdeckschicht aufgebracht. Die passive poröse Filterschicht wird beispielsweise durch einen Aluminiumoxidschaum gebildet. Dieser wird auch über den mindestens einen Durchgang bzw. über das mindestens eine Sackloch bzw. über die mindestens eine längliche Vertiefung ausgebildet.

Alternativ kann ein Schichtverbund mit einer ersten Elektrodenschicht, einer zweiten Elektrodenschicht, einer zwischen der ersten Elektrodenschicht und der zweiten Elektrodenschicht angeordneten ersten Isolationsschicht, mindestens einer zwischen der ersten Isolationsschicht und der ersten Elektrodenschicht angeordneten dritten Elektrodenschicht und mindestens einer zwischen der dritten Elektrodenschicht und der ersten Elektrodenschicht angeordneten zweiten Isolationsschicht hergestellt werden, wobei die erste Isolationsschicht, die mindestens dritte Elektrodenschicht, die mindestens zweite Isolationsschicht und die erste Elektrodenschicht als poröse Schichten ausgebildet werden. Die Poren der ersten und dritten Elektrodenschicht und der ersten und zweiten Isolationsschicht werden derart eingestellt, dass mindestens eine Pore der ersten Elektrodenschicht, mindestens eine Pore der mindestens zweiten Isolationsschicht, mindestens eine Pore der mindestens dritten Elektrodenschicht und mindestens eine Pore der ersten Isolationsschicht zumindest abschnittsweise übereinander angeordnet werden, sodass mindestens ein Durchgang zur zweiten Elektrodenschicht hergestellt wird.

Sofern der Sensor eine Abdeckschicht aufweist, wird auch diese Abdeckschicht mit einer Porengröße und Porosität auf die erste Elektrodenschicht aufgetragen, wobei mindestens eine Pore der Abdeckschicht zumindest abschnittsweise derart über einer Pore der ersten Elektrodenschicht, über einer Pore der mindestens zweiten Isolationsschicht, über einer Pore der mindestens dritten Elektrodenschicht und einer Pore der ersten Isolationsschicht angeordnet wird, dass ausgehend von der Abdeckschicht mindestens ein Durchgang zur zweiten Elektrodenschicht gebildet wird. Abschließend kann auf die Abdeckschicht eine passive poröse Filterschicht aufgetragen werden.

Alternativ kann ein Schichtverbund mit einer ersten Elektrodenschicht, einer zweiten Elektrodenschicht, mindestens einer zwischen der ersten Elektrodenschicht und der zweiten Elektrodenschicht angeordneten ersten Isolationsschicht, mindestens einer zwischen der ersten Isolationsschicht und der ersten Elektrodenschicht angeordneten dritten Elektrodenschicht und mindestens einer zwischen der dritten Elektrodenschicht und der ersten Elektrodenschicht angeordneten zweiten Isolationsschicht hergestellt werden, wobei die erste Isolationsschicht, die mindestens dritte Elektrodenschicht, die mindestens zweite Isolationsschicht und die erste Elektrodenschicht strukturiert, insbesondere durch ein Lift-Off-Verfahren und/oder ein Ink-Jet-Verfahren und/oder in einem Stempel-Prozess erzeugt werden, derart, dass aufgrund des strukturierten Auftrags der einzelnen Schichten übereinander ein Durchgang zur zweiten Elektrodenschicht gebildet wird.

Mit anderen Worten kann bereits bei der Herstellung der Isolationsschicht(en) und/oder der ersten und/oder dritten Elektrodenschicht eine derartige Struktur hergestellt werden, die Öffnungen bzw. Aussparungen aufweist, wobei mehrere, zumindest abschnittsweise übereinander angeordnete Öffnungen mindestens einen Durchgang zur zweiten Elektrodenschicht bilden. Sofern der Sensor eine Abdeckschicht aufweist, kann auch diese Abdeckschicht bereits strukturiert auf die erste Elektrodenschicht aufgebracht werden.

Bei allen beschriebenen Verfahren zum Herstellen eines erfindungsgemäßen Sensors ist es notwendig, dass in der ersten Elektrodenschicht und/oder in der zweiten Elektrodenschicht und/oder in der mindestens dritten Elektrodenschicht jeweils eine elektrische Kontaktierungsfläche ausgebildet wird. Dies wird dadurch erreicht, dass Abschnitte der ersten Elektrodenschicht und/oder der zweiten Elektrodenschicht und/oder der mindestens dritten Elektrodenschicht frei von über den jeweiligen Elektrodenschichten angeordneten Sensorschichten gehalten werden. Dies kann zum einen dadurch erfolgen, dass die elektrischen Kontaktierungsflächen durch Abtragen und/oder Abätzen und/oder Ablasern darüber angeordneter Sensorschichten hergestellt werden. Des Weiteren ist es denkbar, dass die Isolationsschichten und/oder die Elektrodenschichten und/oder die Abdeckschicht(en) strukturiert aufeinander aufgebracht werden, so dass die elektrischen Kontaktierungsflächen bereits bei der Herstellung der einzelnen Sensorschichten freigehalten werden.

Alternativ oder zusätzlich ist es möglich, dass zumindest die Isolationsschichten, vorzugsweise alle Schichten, des Schichtverbunds des Sensors mittels eines HTCC (high temperature cofired ceramics)-Verfahrens hergestellt werden. Die Isolationsschichten werden durch die Zusammensetzung von Pulver, beispielsweise Keramikpulver, Metallpulver, Aluminiumoxidpulver und Glaspulver, sowie einer Menge von Binder und Lösungsmittel produziert, die zusammen eine homogene flüssige Masse bilden. Diese Masse wird auf ein Folienband aufgetragen, sodass Grünfolien geformt werden. Anschließend erfolgt ein Trocknen der Grünfolien. Die getrockneten Grünfolien können geschnitten und/oder gestanzt und/oder geformt, insbesondere mit Öffnungen versehen, werden. Anschließend können die Grünfolien beispielsweise aufgerollt und zur Weiterverarbeitung transportiert werden.

Die Elektrodenschichten können beispielsweise auf der Grünfolie durch Aufdrucken, insbesondere durch Siebdrucken oder Schablonendrucken, von Metallpasten erzeugt werden. Alternativ können dünne Metallfolien hergestellt und entsprechend vorstrukturiert werden.

Nachdem die verschiedenen Substrat-, Elektroden- und Isolationsschichten erstellt wurden, werden die Grünfolien in der gewünschten Reihenfolge angeordnet und passgenau, übereinander positioniert, verpresst und durch Temperaturbehandlung zusammengefügt. Der Binder kann organischer oder anorganischer Natur sein und wandelt sich bei der Temperaturbehandlung entweder in ein stabiles Material um oder verbrennt oder verflüchtigt sich. Die Partikel verbinden sich dabei durch Schmelz- und oder Sintervorgänge während der Temperaturbehandlung fest miteinander. Somit wird die dreidimensionale Struktur des Sensors geformt bzw. hergestellt.

In einer weiteren Ausführungsform der Erfindung ist es denkbar, dass die elektrischen Kontaktierungsflächen mit Hilfe von Schablonen beim Herstellen des Schichtverbundes bedeckt werden, so dass die elektrischen Kontaktierungsflächen nicht mit anderen Sensorschichten beschichtet werden können.

Nachfolgend wird die Erfindung anhand von Ausführungsbeispielen unter Bezugnahme auf die beigefügten schematischen Zeichnungen näher erläutert. Hierbei zeigen:
- Fig. 1a-c: Schnittdarstellungen verschiedener Beispiele vonnicht beanspruchten Sensoren zur Detektion elektrisch leitfähiger und/oder polarisierbarer Partikel;
- Fig. 2: eine perspektivische Draufsicht auf einen Sensor;
- Fig. 3: eine mögliche Ausbildung einer zweiten Elektrodenschicht;
- Fig. 4: eine Schnittdarstellung eines Beispiels eines nicht beanspruchten Sensors zur Detektion elektrisch leitfähiger und/oder polarisierbarer Partikel;
- Fig. 5: eine Schnittdarstellung einer weiteren Ausführungsform eines Sensors zur Detektion von Rußpartikel in einem Abgasstrom von Verbrennungsmotoren, der mindestens drei Elektrodenschichten umfasst;
- Fig. 6a-f: Darstellungen verschiedener Beispiele von Öffnungen;
- Fig. 7a + b: Darstellung einer möglichen Anordnung eines Sensors in einem Fluidstrom;
- Fig. 8a + b: Darstellungen verschiedener Querschnitte bzw. Querschnittsprofile von Durchgängen;
- Fig. 9: Schnittdarstellung von Unterschneidungen in Isolationsschichten bzw. zurückgesetzten Isolationsschichten; und
- Fig. 10a-d: Explosionsdarstellungen verschiedener Beispiele von nicht beanspruchten Sensoren.

Im Folgenden werden für gleiche und gleich wirkende Teile gleiche Bezugsziffern verwendet.

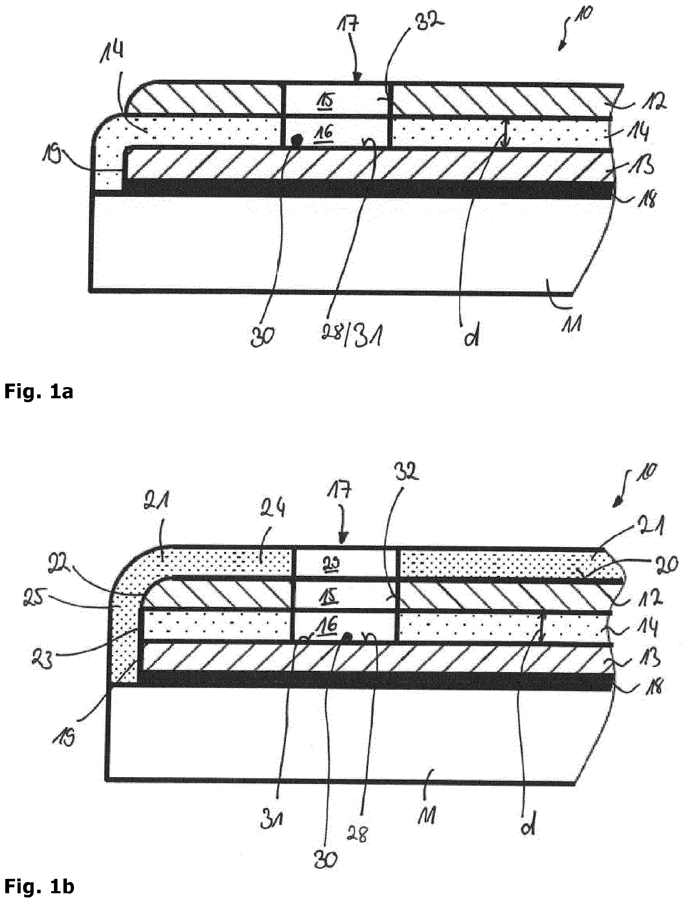

Fig. 1a zeigt in einer Schnittdarstellung einen nicht beanspruchten Sensor 10 zur Detektion elektrisch leitfähiger und/oder polarisierbarer Partikel, insbesondere zur Detektion von Rußpartikel. Der Sensor 10 umfasst ein Substrat 11, eine erste Elektrodenschicht 12 und eine, zwischen dem Substrat 11 und der ersten Elektrodenschicht 12 angeordnete, zweite Elektrodenschicht 13. Zwischen der ersten Elektrodenschicht 12 und der zweiten Elektrodenschicht 13 ist eine Isolationsschicht 14 ausgebildet. In der ersten Elektrodenschicht 12 und in der Isolationsschicht 14 ist jeweils mindestens eine Öffnung ausgebildet, wobei die Öffnung 15 der ersten Elektrodenschicht 12 und die Öffnung 16 der Isolationsschicht 14 übereinander angeordnet sind, so dass ein Durchgang 17 zur zweiten Elektrodenschicht 13 gebildet ist.

Das Substrat 11 ist zum Zwecke einer hochtemperaturfähigen Anwendung beispielsweise aus Aluminiumoxid (Al₂O₃) oder Magnesiumoxid (MgO) oder aus einem Titanat oder aus Steatit gebildet.

Die zweite Elektrodenschicht 13 ist mittelbar über eine Haftvermittlerschicht 18 mit dem Substrat 11 verbunden. Bei der Haftvermittlerschicht 18 kann es sich beispielsweise um sehr dünn ausgebildetes Aluminiumoxid (Al₂O₃) oder Siliziumdioxid (SiO₂) handeln.

Die erste Elektrodenschicht 12 ist im Ausführungsbeispiel aus einer Platinschicht gebildet. Die zweite Elektrodenschicht 13 besteht im dargestellten Beispiel aus einer Platin-Titan-Legierung (Pt-Ti). Bei der Platin-Titan-Legierung der zweiten Elektrodenschicht 13 handelt es sich um eine im Vergleich zur ersten Elektrodenschicht 12 ätzresistentere Schicht.

Der Abstand der ersten Elektrodenschicht 12 zur zweiten Elektrodenschicht 13 wird durch die Dicke d der Isolationsschicht 14 gebildet. Die Dicke d der Isolationsschicht kann 0,5 µm bis 50 µm betragen. Im vorliegenden Fall beträgt die Dicke d der Isolationsschicht 10 µm. Die Empfindlichkeit des erfindungsgemäßen Sensors 10 kann durch Verringerung des Abstandes der ersten Elektrodenschicht 12 von der zweiten Elektrodenschicht 13 und somit durch Verringerung der Dicke d der Isolationsschicht 14 erhöht werden.

Die Isolationsschicht 14 deckt die zweite Elektrodenschicht 13 an der dargestellten Seitenfläche 19 ab, so dass die zweite Elektrodenschicht 13 seitlich ummantelt und isoliert ist.

Der Durchgang 17 ist als Sackloch ausgebildet, wobei ein Abschnitt der zweiten Elektrodenschicht 13 als Boden 28 des Sacklochs ausgebildet ist. Das Sackloch bzw. der Durchgang 17 erstreckt sich über die Isolationsschicht 14 und über die erste Elektrodenschicht 13. Der Durchgang 17 wird mit anderen Worten durch die übereinander angeordneten Öffnungen 15 und 16 gebildet. Die Öffnungen 15 und 16 sind in der dargestellten Ausführungsform nicht randseitig ausgebildet.

Ein Rußpartikel 30 kann in den Durchgang 17 gelangen. In Fig. 1a liegt der Partikel 30 am Boden 28 des Sacklochs und somit auf einer Seite 31 der zweiten Elektrodenschicht 13 auf. Allerdings berührt der Partikel 30 nicht die erste Elektrodenschicht 12 im Randbereich 32, der die Öffnung 15 begrenzt. Aufgrund der Ablagerung des Partikels 30 am Boden 28 und der Berührung der zweiten Elektrodenschicht 13 auf der Seite 31 wird der elektrische Widerstand reduziert. Dieser Abfall des Widerstandes wird als Maß für die angesammelte Partikelmasse genutzt. Beim Erreichen eines vordefinierten Schwellwertes hinsichtlich des Widerstandes wird der Sensor 10 erhitzt, so dass der abgelagerte Partikel 30 verbrannt wird und der Sensor 10 nach dem Freibrennen in einem nächsten Detektionszyklus elektrisch leitfähige und/oder polarisierbare Partikel detektieren kann.

Fig. 1b zeigt ebenfalls in einer Schnittdarstellung einen nicht beanspruchten Sensor 10 zur Detektion elektrisch leitfähiger und/oder polarisierbarer Partikel, insbesondere zur Detektion von Rußpartikel. Ebenfalls dargestellt sind eine erste Elektrodenschicht 12 und eine, zwischen dem Substrat 11 und der ersten Elektrodenschicht 12 angeordnete, zweite Elektrodenschicht 13. Zwischen der ersten Elektrodenschicht 12 und der zweiten Elektrodenschicht 13 ist eine Isolationsschicht 14 ausgebildet. Bezüglich der Eigenschaften und der Ausgestaltung der Öffnungen 15 und 16 wird auf die Erläuterungen im Zusammenhang mit der Ausführungsform gemäß Fig. 1a verwiesen.

Auf der von der Isolationsschicht 14 abgewandten Seite 20 der ersten Elektrodenschicht 12 ist eine Abdeckschicht 21, die beispielsweise aus Keramik und/oder Glas und/oder Metalloxid gebildet ist, ausgebildet. Die Abdeckschicht 21 ummantelt die Seitenfläche 22 der ersten Elektrodenschicht 12, die Seitenfläche 23 der Isolationsschicht 14 und die Seitenfläche 19 der zweiten Elektrodenschicht 13. Die Abdeckschicht 21 deckt somit die Seitenflächen 19, 22 und 23 ab, so dass die erste Elektrodenschicht 12, die zweite Elektrodenschicht 13 und die Isolationsschicht 14 seitlich isoliert sind. Die Abdeckschicht 21 umfasst somit einen oberen Abschnitt 24, der auf der Seite 20 der ersten Elektrodenschicht 12 ausgebildet ist und einen Seitenabschnitt 25, der zur seitlichen Isolation des Sensors 10 dient.

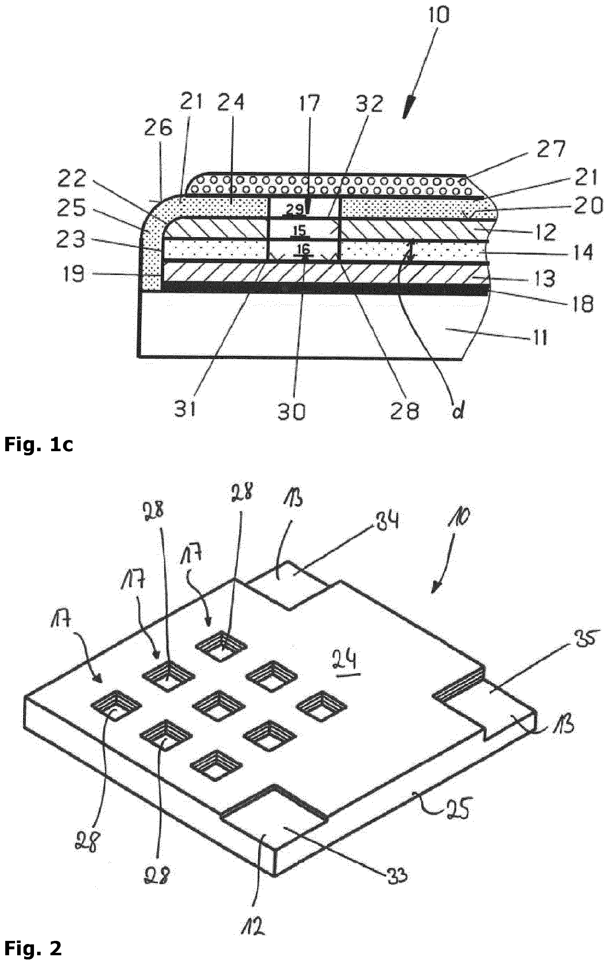

Fig. 1c zeigt in einer Schnittdarstellung einen nicht beanspruchten Sensor 10 zur Detektion elektrisch leitfähiger und/oder polarisierbarer Partikel, insbesondere zur Detektion von Rußpartikel. Der Sensor 10 umfasst ein Substrat 11, eine erste Elektrodenschicht 12 und eine, zwischen dem Substrat 11 und der ersten Elektrodenschicht 12 angeordnete, zweite Elektrodenschicht 13. Zwischen der ersten Elektrodenschicht 12 und der zweiten Elektrodenschicht 13 ist eine Isolationsschicht 14 ausgebildet. In der ersten Elektrodenschicht 12 und in der Isolationsschicht 14 ist jeweils mindestens eine Öffnung ausgebildet, wobei die Öffnung 15 der ersten Elektrodenschicht 12 und die Öffnung 16 der Isolationsschicht 14 übereinander angeordnet sind, so dass ein Durchgang 17 zur zweiten Elektrodenschicht 13 gebildet ist.

Das Substrat 11 ist zum Zwecke einer hochtemperaturfähigen Anwendung beispielsweise aus Aluminiumoxid (Al₂O₃) oder Magnesiumoxid (MgO) oder aus einem Titanat oder aus Steatit gebildet.

Die zweite Elektrodenschicht 13 ist mittelbar über eine Haftvermittlerschicht 18 mit dem Substrat 11 verbunden. Bei der Haftvermittlerschicht 18 kann es sich beispielsweise um sehr dünn ausgebildetes Aluminiumoxid (Al₂O₃) oder Siliziumdioxid (SiO₂) handeln.

Die erste Elektrodenschicht 12 ist im Ausführungsbeispiel aus einer Platinschicht gebildet. Die zweite Elektrodenschicht 13 besteht im dargestellten Beispiel aus einer Platin-Titan-Legierung (Pt-Ti). Bei der Platin-Titan-Legierung der zweiten Elektrodenschicht 13 handelt es sich um eine im Vergleich zur ersten Elektrodenschicht 12 ätzresistentere Schicht.

Die Isolationsschicht 14 besteht aus einem temperaturfestes Material mit hohem Isolationswiderstand. Beispielsweise kann die Isolationsschicht 14 aus Aluminiumoxid (Al₂O₃) oder Siliziumdioxid (SiO₂) oder Magnesiumoxid (MgO) oder Siliziumnitrid (Si₃N4) oder Glas gebildet sein.

Der Abstand der ersten Elektrodenschicht 12 zur zweiten Elektrodenschicht 13 wird durch die Dicke d der Isolationsschicht 14 gebildet. Die Dicke d der Isolationsschicht kann 0,5 µm bis 50 µm betragen. Im vorliegenden Fall beträgt die Dicke d der Isolationsschicht 10 µm. Die Empfindlichkeit des erfindungsgemäßen Sensors 10 kann durch Verringerung des Abstandes der ersten Elektrodenschicht 12 von der zweiten Elektrodenschicht 13 und somit durch Verringerung der Dicke d der Isolationsschicht 14 erhöht werden.

Auf der von der Isolationsschicht 14 abgewandten Seite 20 der ersten Elektrodenschicht 12 ist eine Abdeckschicht 21, die beispielsweise aus Keramik und/oder Glas und/oder Metalloxid gebildet ist, ausgebildet. Die Abdeckschicht 21 ummantelt die Seitenfläche 22 der ersten Elektrodenschicht 12, die Seitenfläche 23 der Isolationsschicht 14 und die Seitenfläche 19 der zweiten Elektrodenschicht 13. Die Abdeckschicht 21 deckt somit die Seitenflächen 19, 22 und 23 ab, so dass die erste Elektrodenschicht 12, die zweite Elektrodenschicht 13 und die Isolationsschicht 14 seitlich isoliert sind. Die Abdeckschicht 21 umfasst somit einen oberen Abschnitt 24, der auf der Seite 20 der ersten Elektrodenschicht 12 ausgebildet ist und einen Seitenabschnitt 25, der zur seitlichen Isolation des Sensors 10 dient.

In einer Ausführungsform der Erfindung ist es denkbar, dass die Abdeckschicht 21 auch das Substrat 11 seitlich ummantelt.

Auf der von der ersten Elektrodenschicht 12 abgewandten Seite 26 der Abdeckschicht 21 ist eine poröse Filterschicht 27 ausgebildet. Aufgrund der Ausbildung dieser, dem Medium, das hinsichtlich elektrisch leitfähiger und/oder polarisierbarer Partikel detektiert werden soll, zugewandten passiven porösen Filter- bzw. Schutzschicht 27 wird die Sensitivität des Sensors 10 erhöht, da größere Partikel bzw. Bestandteile, welche die Messung bzw. Detektion stören könnten, von der ersten Elektrodenschicht 12 und der zweiten Elektrodenschicht 13 ferngehalten werden. Da der Durchgang 17 von der porösen Filterschicht 27 bedeckt ist, können durch die Poren der porösen Filterschicht 27 zwar noch Partikel durchdringen, Kurzschlüsse aufgrund von großen eingedrungenen Partikel können aber aufgrund der porösen Filterschicht 27 vermieden werden.

Der Durchgang 17 ist als Sackloch ausgebildet, wobei ein Abschnitt der zweiten Elektrodenschicht 13 als Boden 28 des Sacklochs ausgebildet ist. Das Sackloch bzw. der Durchgang 17 erstreckt sich über die Isolationsschicht 14, die erste Elektrodenschicht 13 und über die Abdeckschicht 21. Hierzu weist auch die Abdeckschicht 21 eine Öffnung 29 auf. Der Durchgang 17 wird mit anderen Worten durch die übereinander angeordneten Öffnungen 29, 15 und 16 gebildet.

Der dargestellte Sensor 10 ist aufgrund der Materialauswahl der einzelnen Schichten und der Isolation der einzelnen Schichten zueinander für eine Hochtemperaturanwendung von bis zu beispielsweise 850 °C geeignet. Der Sensor 10 kann demnach als Rußpartikelsensor im Abgasstrom eines Verbrennungsmotors eingesetzt werden.

Ein Rußpartikel 30 kann nach dem Durchdringen der porösen Filterschicht 27 in den Durchgang 17 gelangen. In Fig. 1c liegt der Partikel 30 am Boden 28 des Sacklochs und somit auf einer Seite 31 der zweiten Elektrodenschicht 13 auf. Allerdings berührt der Partikel nicht die erste Elektrodenschicht 12 im Randbereich 32, der die Öffnung 15 begrenzt. Aufgrund der Ablagerung des Partikels 30 am Boden 28 und der Berührung der zweiten Elektrodenschicht 13 auf der Seite 31 wird der elektrische Widerstand reduziert. Dieser Abfall des Widerstandes wird als Maß für die angesammelte Partikelmasse genutzt. Beim Erreichen eines vordefinierten Schwellwertes hinsichtlich des Widerstandes wird der Sensor 10 erhitzt, so dass der abgelagerte Partikel 30 verbrannt wird und der Sensor 10 nach dem Freibrennen in einem nächsten Detektionszyklus elektrisch leitfähige und/oder polarisierbare Partikel detektieren kann.

Fig. 2 zeigt eine perspektivische Ansicht auf einen Sensor 10. Dieser weist neun Durchgänge 17 auf. Zur besseren Veranschaulichung ist in Fig. 2 die poröse Filterschicht 27 nicht dargestellt. Zu erkennen ist der obere Abschnitt 24 der Abdeckschicht 21 sowie der Seitenabschnitt 25 der Abdeckschicht 21. Die Böden 28 der Durchgänge 17 werden durch Abschnitte der zweiten Elektrodenschicht 13 gebildet. Die neun Durchgänge 17 weisen einen quadratischen Querschnitt auf, wobei der quadratische Querschnitt eine Fläche von 15 x 15 µm² bis 50 x 50 µm² aufweisen kann.

Die erste Elektrodenschicht 12 weist eine elektrische Kontaktierungsfläche 33 auf. Die zweite Elektrodenschicht 13 weist ebenfalls eine elektrische Kontaktierungsfläche 34 auf. Die beiden elektrischen Kontaktierungsflächen 33 und 34 sind frei von über den jeweiligen Elektrodenschichten 12 und 13 angeordneten Sensorschichten. Die elektrischen Kontaktierungsflächen 33 und 34 sind jeweils an ein Anschlusspad (nicht dargestellt) angeschlossen oder anschließbar.

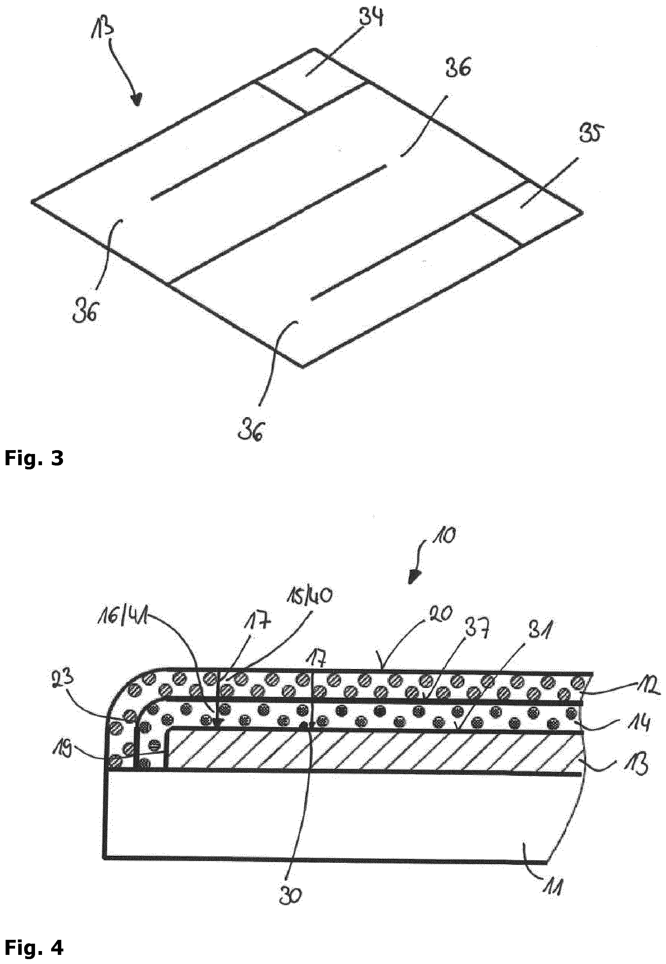

Die zweite Elektrodenschicht 13 weist eine zusätzliche elektrische Kontaktierungsfläche 35 auf, die ebenfalls frei von über der Elektrodenschicht 13 angeordneten Sensorschichten ist. Diese zusätzliche elektrische Kontaktierungsfläche 35 kann an ein zusätzliches Anschlusspad angeschlossen werden. Die zusätzliche elektrische Kontaktierungsfläche 35 ist notwendig, um die zweiten Elektrodenschicht 13 als Heizwendel oder als temperatursensitive Schicht oder als Schirmelektrode verwenden zu können. Je nach Kontaktierungsbelegung (siehe Fig. 3) der elektrischen Kontaktierungsflächen 34 und 35 kann die zweite Elektrodenschicht 13 entweder heizen bzw. den Partikel 30 verbrennen oder den Partikel 30 detektieren.

Um eine Elektrodenschicht, hier die zweite Elektrodenschicht 13, als Heizwendel und/oder temperatursensitive Schicht und/oder Schirmelektrode verwenden zu können, weist die zweite Elektrodenschicht 13 wenige Leiterbahnschleifen 36 auf.

In Fig. 4 ist ein weiteres Beispiel eines möglichen nicht beanspruchten Sensors 10 dargestellt. Die erste Elektrodenschicht 12 und die Isolationsschicht 14 sind jeweils porös ausgebildet, wobei die mindestens eine Öffnung 15 der ersten Elektrodenschicht 12 und die mindestens eine Öffnung 16 der Isolationsschicht 14 jeweils aus mindestens einer Pore gebildet ist, wobei die Pore 41 der Isolationsschicht 14 und die Pore 40 der ersten Elektrodenschicht 12 zumindest abschnittsweise derart übereinander angeordnet sind, dass der mindestens eine Durchgang 17 zur zweiten Elektrodenschicht 13 gebildet ist. Mit anderen Worten kann auf eine aktive bzw. nachträgliche Strukturierung der Durchgänge verzichtet werden, wobei die erste Elektrodenschicht 12 und die Isolationsschicht 14 für das zu messende Medium durchlässig ausgebildet ist. Die Durchgänge 17 sind in Fig. 4 mit Hilfe der senkrechten Pfeile dargestellt.

Die Durchgänge 17 können durch einen porösen bzw. grobkörnigen Aufbau der beiden Schichten 12 und 14 gebildet werden. Sowohl die erste Elektrodenschicht 12 als auch die Isolationsschicht 14 kann durch Zusammensintern einzelner Partikel hergestellt werden, wobei Poren 40 und 41 bzw. Hohlräume für das zu messende Medium beim Zusammensintern gebildet werden. Es muss demnach ausgehend von der Seite 20 der ersten Elektrodenschicht 12, die von der Isolationsschicht 14 abgewandt ist, bis zur Seite 31 der zweiten Elektrodenschicht 13, die der Isolationsschicht 14 zugewandt ist, aufgrund der übereinander ausgebildeten Anordnung von Poren 40 und 41 der ersten Elektrodenschicht 12 und der Isolationsschicht 14 ein Durchgang 17 gebildet sein, der einen Zugang eines zu messenden bzw. detektierenden Partikels 30 zur zweiten Elektrodenschicht 13 ermöglicht.

Im dargestellten Beispiel ist die zweite Elektrodenschicht 13 an der Seitenfläche 19 vollständig von der porösen Isolationsschicht 14 ummantelt. Die zweite Elektrodenschicht 13 wird demnach auf der Seite 31 und an den Seitenflächen 19 von der porösen Isolationsschicht 14 bedeckt. Die poröse erste Elektrodenschicht 12 ummantelt hingegen die poröse Isolationsschicht 14 an der Seitenfläche 23 und an der von der zweiten Elektrodenschicht 13 abgewandten Seite 37. Die Isolationsschicht 14 wird demnach auf der Seite 37 und an den Seitenflächen 23 von der ersten Elektrodenschicht 12 bedeckt.

Sofern dieser Sensor 10 eine Abdeckschicht aufweist, ist auch diese Abdeckschicht porös auszubilden, derart, dass eine Pore der Abdeckschicht, eine Pore 40 der ersten Elektrodenschicht 12 und eine Pore 41 der Isolationsschicht 14 einen Durchgang 17 zur zweiten Elektrodenschicht 13 bilden.

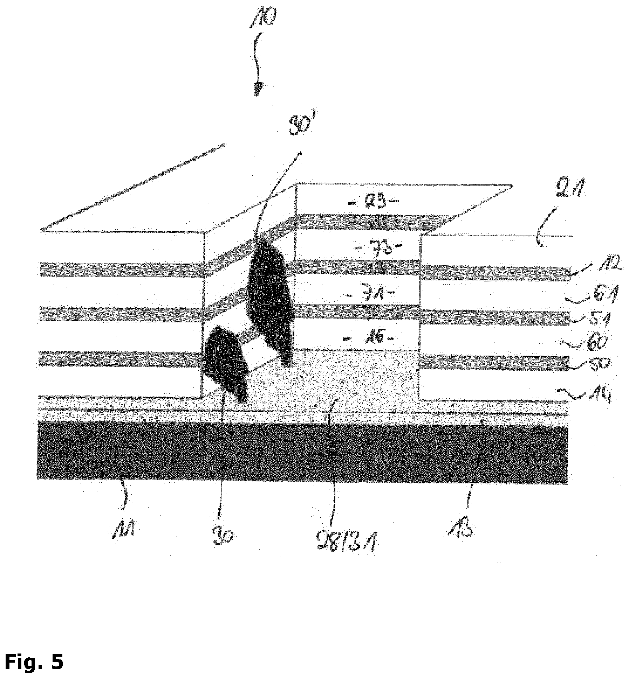

In Fig. 5 ist ein Schnitt durch einen erfindungsgemäßen Sensor 10 zur Detektion elektrisch leitfähiger und/oder polarisierbarer Partikel, insbesondere zur Detektion von Rußpartikel, dargestellt. Der Sensor 10 kann prinzipiell zur Detektion von Partikel in Gasen und in Flüssigkeiten verwendet werden. Der Sensor 10 umfasst ein Substrat 11, eine erste Elektrodenschicht 12, eine, zwischen dem Substrat 11 und der ersten Elektrodenschicht 12 angeordnete, zweite Elektrodenschicht 13, wobei zwischen der ersten Elektrodenschicht 12 und der zweiten Elektrodenschicht 13 eine ersten Isolationsschicht 14 ausgebildet ist.

Zwischen der ersten Isolationsschicht 14 und der ersten Elektrodenschicht 12 ist mindestens eine dritte Elektrodenschicht 50 ausgebildet, wobei zwischen der dritten Elektrodenschicht 50 und der ersten Elektrodenschicht 12 mindestens eine zweite Isolationsschicht 60 ausgebildet ist.

Gemäß Sensor 10 der Fig. 5 sind also mindestens drei Elektrodenschichten 12, 13, 50 und mindestens zwei Isolationsschichten 14, 60 ausgebildet. Die erste Elektrodenschicht 12 ist dabei die Elektrodenschicht, die vom Substrat 11 am weitesten beabstandet angeordnet ist. Die zweite Elektrodenschicht 13 ist hingegen unmittelbar mit dem Substrat 11 verbunden. Es ist möglich, dass die zweite Elektrodenschicht 13 mittelbar, vorzugsweise mittels einer Haftvermittlerschicht, mit dem Substrat 11 verbunden ist.

In der Ausführungsform gemäß Fig. 5 ist außerdem eine vierte Elektrodenschicht 51 sowie eine dritte Isolationsschicht 61 ausgebildet. Der Sensor 10 umfasst folglich insgesamt vier Elektrodenschichten, nämlich die erste Elektrodenschicht 12, die zweite Elektrodenschicht 13, sowie die dritte Elektrodenschicht 50 und die vierte Elektrodenschicht 51. Zwischen den Elektrodenschichten (12, 13, 50, 51) sind jeweils Isolationsschichten, nämlich die erste Isolationsschicht 14, die zweite Isolationsschicht 60 sowie die dritte Isolationsschicht 61 ausgebildet. Der Sensor 10 umfasst des Weiteren eine Abdeckschicht 21, die auf der vom Substrat 11 weg weisenden Seite der ersten Elektrodenschicht 12 ausgebildet ist.

In der ersten Elektrodenschicht 12, in der dritten Isolationsschicht 61, in der vierten Elektrodenschicht 51, in der zweiten Isolationsschicht 60, in der dritten Elektrodenschicht 50 und in der ersten Isolationsschicht 14 ist jeweils mindestens eine Öffnung 15, 16, 70, 71, 72, 73 ausgebildet. Auch die Abdeckschicht 21 weist eine Öffnung 29 auf. Die Öffnung 15 der ersten Elektrodenschicht 12, die Öffnung 73 der dritten Isolationsschicht 61, die Öffnung 72 der vierten Elektrodenschicht 51, die Öffnung 71 der zweiten Isolationsschicht 60, die Öffnung 70 der dritten Elektrodenschicht 50 und die Öffnung 16 der ersten Isolationsschicht 14 sind zumindest abschnittsweise derart übereinander angeordnet, dass mindestens ein Durchgang 17 zur zweiten Elektrodenschicht 13 gebildet ist.

Der Abstand der Elektrodenschichten 12, 13, 50 und 51 zueinander wird durch die Dicke der Isolationsschichten 14, 60 und 61 gebildet. Die Dicke der Isolationsschichten 14, 60 und 61 kann 0,1 µm bis 50 µm betragen. Die Empfindlichkeit des erfindungsgemäßen Sensors 10 kann durch Verringerung des Abstandes der Elektrodenschichten 12, 13, 50 und 51 und somit durch Verringerung der Dicke der Isolationsschichten 14, 60 und 61 erhöht werden. Der Durchgang 17 ist als Sackloch ausgebildet, wobei ein Abschnitt der zweiten Elektrodenschicht 13 als Boden 28 des Sacklochs ausgebildet ist. Das Sackloch bzw. der Durchgang 17 erstreckt sich über die erste Isolationsschicht 14, die dritte Elektrodenschicht 50, die zweite Isolationsschicht 60, die vierte Elektrodenschicht 51, die dritte Isolationsschicht 61, die erste Elektrodenschicht 12 und über die Abdeckschicht 21. Der Durchgang 17 wird mit anderen Worten durch die übereinander angeordneten Öffnungen 16, 70, 71, 72, 73, 15 und 29 gebildet. Die Öffnungen 16, 70, 71, 72, 73, 15 und 29 sind in der dargestellten Ausführungsform nicht randseitig ausgebildet. Dargestellt ist ein perspektivischer Schnitt durch einen Durchgang 17.

Ein beispielsweise kleiner Rußpartikel 30 kann in den Durchgang 17 gelangen. In Fig. 5 liegt der Partikel 30 am Boden 28 des Sacklochs und somit auf einer Seite 31 der zweiten Elektrodenschicht 13 auf. Des Weiteren berührt der Partikel 30 die dritte Elektrodenschicht 50. Sofern die Bestimmung von Partikel auf Grundlage des resistiven Prinzips erfolgt, wird der Widerstand zwischen der zweiten Elektrodenschicht 13 sowie der dritten Elektrodenschicht 50 gemessen, wobei dieser Widerstand abnimmt, wenn der Partikel 30 die beiden Elektrodenschichten 13 und 50 verbrückt. Die Größe des Partikels 30 ist somit relativ klein.

Des Weiteren ist in den Durchgang 17 der Rußpartikel 30' gelangt. Der Partikel 30' liegt am Boden 28 des Sacklochs und somit auf der Seite 31 der zweiten Elektrodenschicht auf. Des Weiteren berührt der Partikel 30' die dritte Elektrodenschicht 50, die vierte Elektrodenschicht 51 sowie die erste Elektrodenschicht 12. Der Partikel 30' überbrückt somit mehrere, im dargestellten Beispiel alle Elektrodenschichten 12, 13, 50 und 51, so dass der Partikel 30' als im Vergleich zum Partikel 30 größerer Partikel detektiert wird.

Durch das Anlegen verschiedener Spannungen an den Elektrodenschichten 12, 13, 50 und 51 können verschiedene Partikeleigenschaften, insbesondere verschiedene Rußeigenschaften, wie z.B. der Durchmesser und/oder die Größe des (Ruß)partikels und/oder die Aufladung des (Ruß)partikels und/oder die Polarisierbarkeit des (Ruß)partikels gemessen werden.

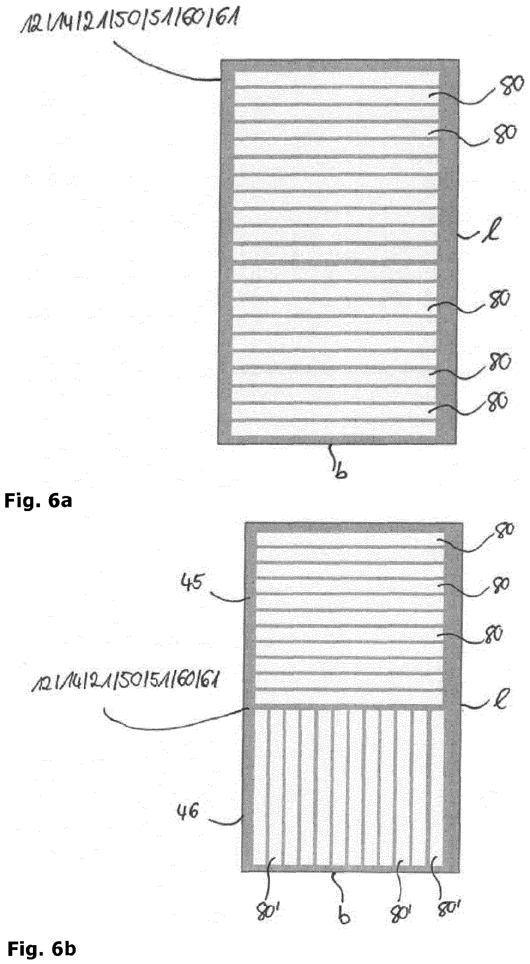

In den Fig. 6a bis 6f sind verschiedene Beispiele von Öffnungen 80 dargestellt. Die Öffnungen 80 können sowohl in Isolationsschichten 14, 60 und 61 als auch in Elektrodenschichten 12, 50 und 51 ausgebildet sein. Demnach kann es sich bei den dargestellten Öffnungen 80 um eine Anordnung von Öffnungen 15 einer ersten Elektrodenschicht 12, um Öffnungen 16 einer ersten Isolationsschicht 14, um Öffnungen 70 einer dritten Elektrodenschicht 50, um Öffnungen 71 einer zweiten Isolationsschicht 60, um Öffnungen 72 einer vierten Elektrodenschicht 51 sowie um Öffnungen 73 einer dritten Isolationsschicht 61 handeln.

Vorzugsweise sind die Öffnungen 80 in einem Schichtverbund des Sensors 10 gleichartig ausgebildet. Die einzelnen Schichten 12, 14, 21, 50, 51, 60 und 61 sind derart übereinander angeordnet, dass die Öffnungen 15, 16, 29, 70, 71, 72 und 73 Durchgänge 17 bilden. Aufgrund der in den Fig. 6a bis 6d dargestellten Öffnungen werden längliche Vertiefungen 17' bzw. 17" gebildet.

In Fig. 6a sind linienartige Öffnungen 80 ausgebildet, wobei die Öffnungen 80 parallel zueinander ausgebildet sind und alle in die gleiche Vorzugsrichtung weisen.

In Fig. 6b ist eine Schicht des Sensors 10 in einen ersten Abschnitt 45 sowie in einen zweiten Abschnitt 46 unterteilt. Alle dargestellten Öffnungen 80, 80' sind als linienartige Aussparungen ausgebildet, wobei sowohl die Öffnungen 80 des ersten Abschnittes 45 parallel zueinander ausgebildet sind, als auch die Öffnungen 80' im zweiten Abschnitt 46 zueinander parallel ausgebildet sind. Die Öffnungen 80 im ersten Abschnitt 45 verlaufen parallel in horizontaler Richtung bzw. parallel zur Breite b der Sensorschicht, wohingegen die Öffnungen 80' des zweiten Abschnittes 46 parallel in vertikaler Richtung bzw. parallel zur Länge l der Sensorschicht verlaufen. Die Öffnungen 80' des zweiten Abschnittes 46 verlaufen in senkrechter Richtung zu den Öffnungen 80 des ersten Abschnittes 45.

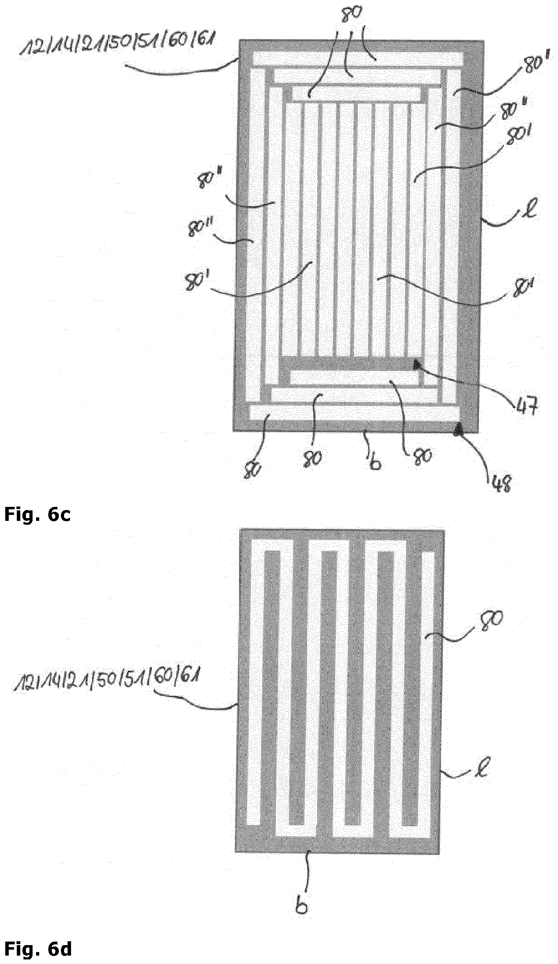

In Fig. 6c sind ebenfalls mehrere Öffnungen 80, 80', 80" in Form länglicher Ausnehmungen dargestellt. In einem mittigen Abschnitt 47 sind mehrere, im dargestellten Beispiel acht, in vertikaler Richtung verlaufende linienartige Öffnungen 80', die parallel zur Länge l der Sensorschicht ausgebildet sind, dargestellt. Diese werden von weiteren, einem rahmenartigen Abschnitt 48 bildende Öffnungen 80, 80" umrahmt. Erste Öffnungen 80" sind dabei parallel zu den Öffnungen 80' des mittigen Abschnitts 47 ausgebildet. Weitere Öffnungen 80 sind senkrecht zu den Öffnungen 80, 80" ausgebildet. Die Öffnungen 80" weisen unterschiedliche Längen auf, so dass die Schicht des Sensors 10 mit einer möglichst großen Anzahl von Öffnungen 80 ausgebildet werden kann.

In Fig. 6d ist eine Sensorschicht mit einer länglichen, durchgehenden Öffnung 80 dargestellt, wobei die Öffnung 80 mäanderförmig verläuft.

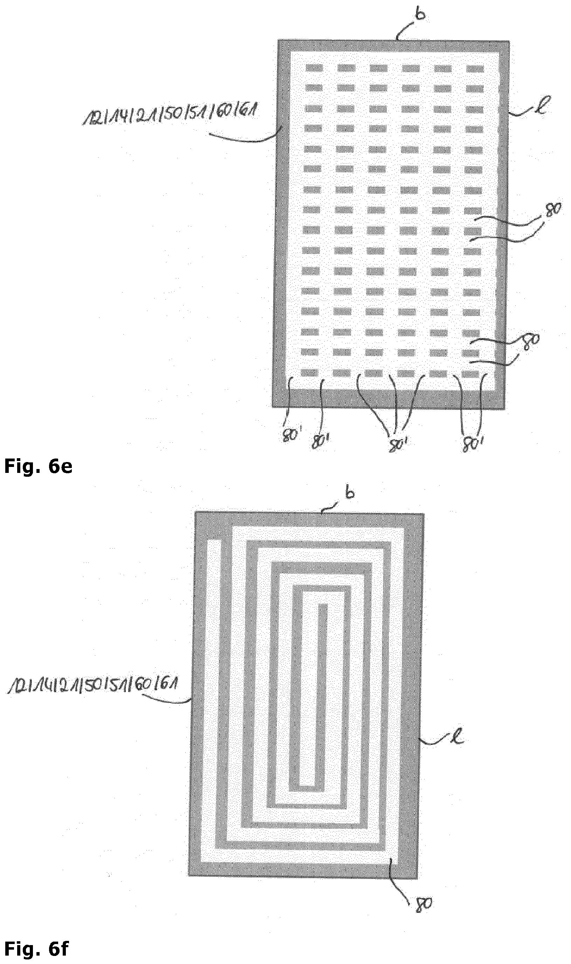

In Fig. 6e ist eine weitere Sensorschicht mit mehreren vertikal verlaufenden Öffnungen 80' und mehrere horizontal verlaufende Öffnungen 80 dargestellt. Die vertikalen Öffnungen 80' sowie die horizontalen Öffnungen 80 bilden eine Gitterstruktur.

Neben rechtwinkligen Gitterstrukturen sind auch andere Winkelanordnungen herstellbar oder Geometrien in welchen die Gitter- oder Netzstruktur rundliche, kreisförmige oder ovale Formen aufweist. Weiterhin sind entsprechende Kombinationen der Strukturen erzeugbar, die regelmäßig, periodisch oder unregelmäßig sein können.

In Fig. 6f ist eine Sensorschicht mit einer länglichen, durchgehenden Öffnung 80 dargestellt, wobei die Öffnung 80 spiralartig verläuft. Neben rechtwinkligen Geometrien sind auch kreisförmige, ovale Geometrien herstellbar oder Kombinationen davon.

Jeweils mehrere Schichten, die jeweils Öffnungen 80, 80', 80" gemäß einer Ausführungsform der Fig. 6a, 6b, 6c, 6d, 6e oder 6f aufweisen, sind übereinandergeschichtet angeordnet, so dass Durchgänge in Form länglicher Vertiefungen 17' bzw. 17" in einem Sensor gebildet werden.

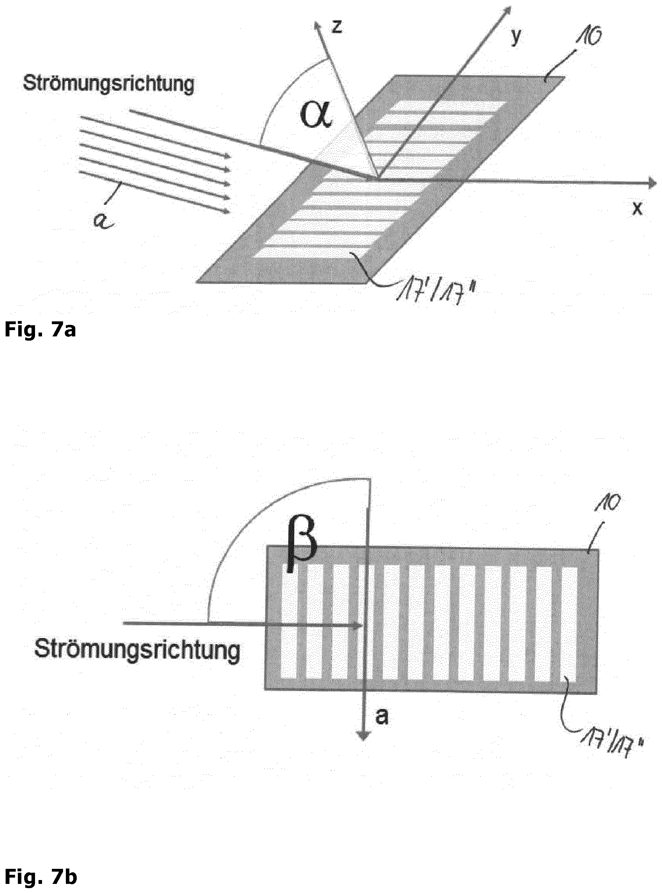

Wie in Fig. 7a dargestellt ist, wird ein Sensor 10 in einen Fluidstrom derart eingebracht, dass die Strömungsrichtung a der Partikel nicht senkrecht auf die Ebene (x,y) der Elektrodenschichten auftrifft. Der Winkel α zwischen der Normalen (z) auf der Ebene (x,y) der ersten Elektrodenschicht und der Strömungsrichtung der Partikel beträgt dabei mindesten 1 Grad, bevorzugt mindestens 10 Grad, besonders bevorzugt mindestens 30 Grad. Die Partikel können somit einfacher in die länglichen Vertiefungen 17', 17" und somit einfacher an die Öffnungswände der darin ausgebildeten Elektrodenschichten 12, 50, 51 geführt werden.

In Fig. 7b ist ein Sensor 10 so in einen Fluidstrom derart eingebracht, dass der Winkel β zwischen der Strömungsrichtung a der Partikel und der Längsachse x der länglichen Vertiefungen zwischen 20 und 90 Grad liegt.

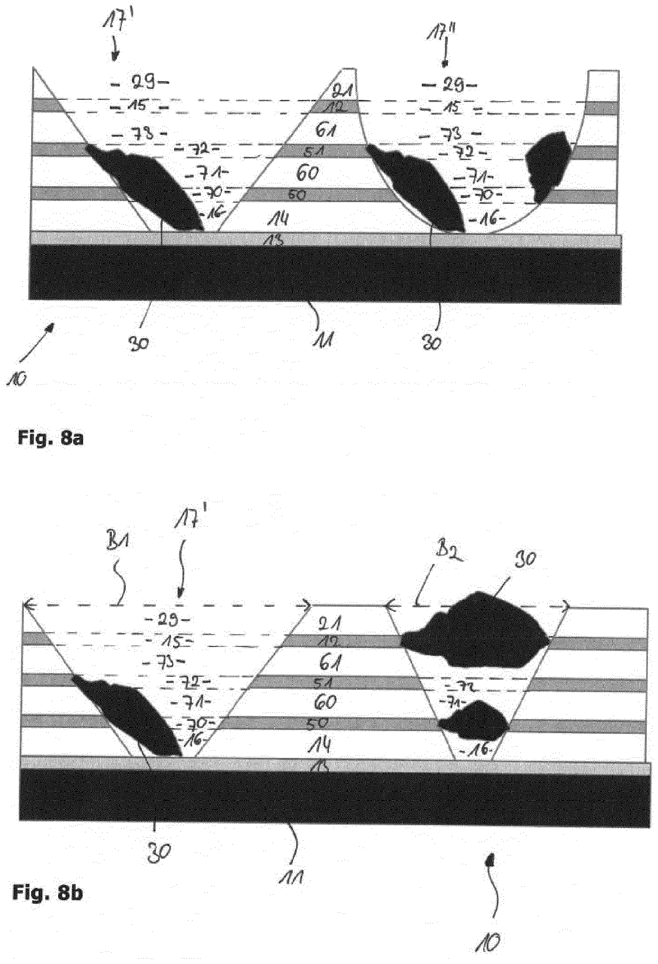

In den Fig. 8a und 8b ist jeweils ein Querschnitt dargestellt, der senkrecht zum Sensor 10, also beginnend von der obersten Isolations- bzw. Abdeckschicht 21 zum Substrat 11 durchgeführt ist. Die Sensoren 10 der Fig. 8a und 8b weisen vier Elektrodenschichten, nämlich eine erste Elektrodenschicht 12, eine zweite Elektrodenschicht 13 sowie eine dritte Elektrodenschicht 50 und eine vierte Elektrodenschicht 51 auf. Des Weiteren sind drei Isolationsschichten, nämlich eine erste Isolationsschicht 14, eine zweite Isolationsschicht 60 sowie eine dritte Isolationsschicht 61 ausgebildet.

Im Sensor 10 gemäß Fig. 8a sind die Querschnittsprofile von zwei Durchgängen in Form länglicher Vertiefungen 17', 17" dargestellt. Der linke Durchgang 17' weist einen V-förmigen Querschnitt bzw. ein V-förmiges Querschnittsprofil auf. Der rechte Durchgang 17" weist hingegen einen U-förmigen Querschnitt bzw. ein U-förmiges Querschnittsprofil auf. Die Öffnungsgrößen bzw. Öffnungsquerschnitte nehmen ausgehend von der Abdeckschicht 21 in Richtung zur zweiten Elektrodenschicht 13 ab. Die Querschnitte der Öffnungen 29, 15, 73, 72, 71, 70 und 16 werden ausgehend von dem ersten Öffnungsquerschnitt 29 in Richtung der untersten Querschnittsöffnung 16 immer kleiner.

Mit Hilfe der V-förmigen und U-förmigen Querschnittsprofile werden die Messungen von runden Partikeln verbessert.

In Fig. 8b ist außerdem dargestellt, dass die Durchgänge 17', 17" unterschiedliche Breiten aufweisen können. Der linke Durchgang 17' weist eine Breite B1 auf. Der dargestellte rechte Durchgang 17" weist eine Breite B2 auf. B1 ist größer als B2. Aufgrund unterschiedlich breit ausgebildeter Durchgänge 17', 17" können größenspezifische Messungen der Partikel 30 durchgeführt werden.

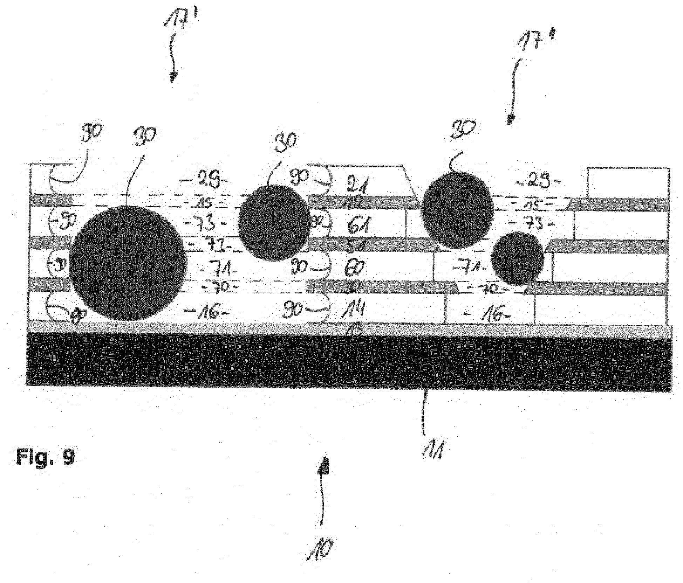

In Fig. 9 sind im Querschnitt Unterschneidungen in Isolationsschichten 14, 21, 60, 61 bzw. zurückgesetzte Isolationsschichten 14, 21, 60, 61 dargestellt. Bei runden Partikeln ist die Ausbildung ebener bzw. glatter Durchgangsflächen ungünstig. Durch die Ausbildung von Unterschneidungen bzw. zurückversetzten Isolationsschichten kann die Messung von runden Partikeln verbessert werden.

Der dargestellte linke Durchgang 17' weist eine erste Isolationsschicht 14, eine zweite Isolationsschicht 60 sowie eine dritte Isolationsschicht 61 und eine Abdeckschicht 21, die auch als Isolationsschicht dient, auf. Die Isolationsschichten 14, 60, 61 und 21 weisen Unterschneidungen bzw. Aussparungen 90 auf. Die Größe der Öffnungen 16, 71, 73 und 29 der Isolationsschichten 14, 60, 61 und 21 sind somit größer als die Öffnungen 70, 72 und 15 der jeweils über bzw. unter den Isolationsschichten 14, 60, 61 und 21 ausgebildeten Elektrodenschichten 12, 50 und 51.

Dies gilt auch im Zusammenhang mit dem rechten dargestellten Durchgang 17". In diesem Fall sind die Isolationsschichten 14, 16, 61 und 21 im Vergleich zu den Elektrodenschichten 50, 51 und 12 zurückgesetzt ausgebildet. Die Öffnungen 16, 71 oder 73 einer Isolationsschicht 14, 60 oder 61 ist jeweils größer ausgebildet als eine darüber ausgebildete Öffnung 70, 72 oder 15 einer über der jeweiligen Isolationsschicht angeordneten Elektrodenschicht 50, 51 oder 12. Da das Querschnittsprofil des rechten Durchgangs 17" V-förmig ausgebildet ist und die Öffnungen aller Schichten 21, 12, 61, 51, 60, 50 und 14 in Richtung des Substrats 11 kleiner werden, weisen die Öffnungen 16, 71, 73 und 29 der Isolationsschichten 14, 60, 61 und 21 keine übereinstimmenden Größen auf.

Im Zusammenhang mit den in den Fig. 5, 8a, 8b und 9 dargestellten Sensoren 10 ist darauf hinzuweisen, dass es möglich ist, dass lediglich zwei oberste Elektrodenschichten im Rahmen eines Durchgangs zugänglich gemacht sein müssen. Mit anderen Worten kann in einem, vorzugsweise erfindungsgemäßen, Verfahren in einem Sensor 10 ein Durchgang 17, 17', 17" gebildet werden, der lediglich hinsichtlich der obersten Elektrodenschichten 12 und 51 ausgebildet ist.

Außerdem ist es möglich, dass ein Sensor 10 mehrere Durchgänge 17, 17', 17" umfasst, wobei mindestens ein erster Durchgang lediglich bis zur vierten Elektrodenschicht 51 reicht. Die vierte Elektrodenschicht 51 oder die zweite Isolationsschicht 60 bildet den Boden dieses gebildeten Durchgangs.

Ein zweiter Durchgang reicht bis zur dritten Elektrodenschicht 50. Die dritte Elektrodenschicht 50 oder die erste Isolationsschicht 14 bildet den Boden des gebildeten Durchgangs. Ein dritter Durchgang reicht bis zur zweiten Elektrodenschicht 13. Die zweite Elektrodenschicht 13 bildet den Boden des gebildeten Durchgangs.

Diese Ausführungsform ist losgelost von den Merkmalen der in den Fig. 5, 8a, 8b und 9 dargestellten Sensoren 10 ausführbar bzw. bildbar.

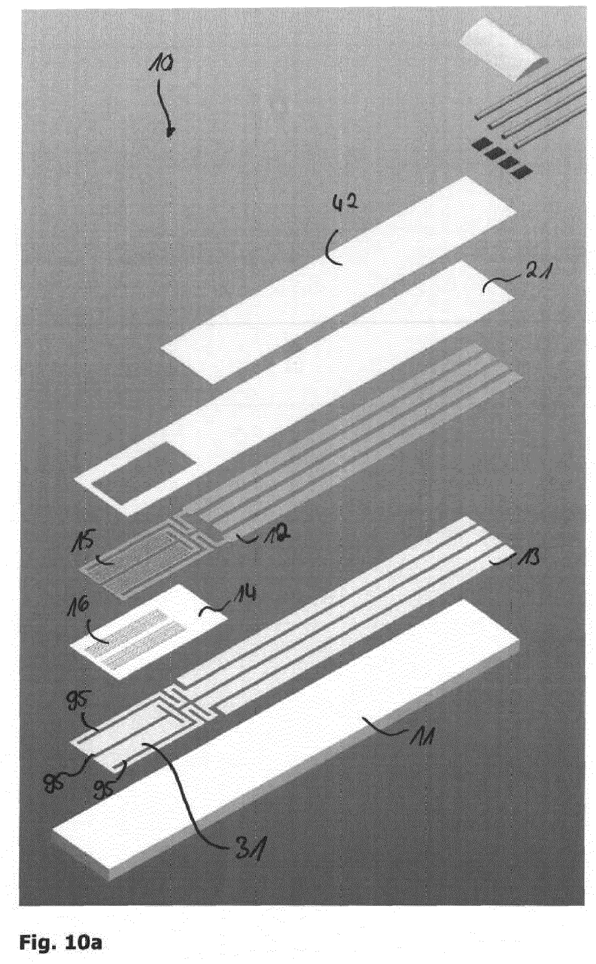

Die Explosionsdarstellungen der Fig. 10a bis 10d verdeutlichen, dass in mehreren Schichten eines nicht beanspruchten Sensors 10 mehrere Öffnungen ausgebildet sein können, wobei die Schichten derart übereinander angeordnet sind, dass auch die Öffnungen übereinander ausgebildet sind, so dass Durchgänge 17, 17' und 17" gebildet werden können.

Die dargestellten Sensoren 10 umfassen ein Substrat 11, eine darauf angeordnete zweite Elektrodenschicht 13, eine erste Elektrodenschicht 12 sowie eine zwischen der ersten Elektrodenschicht 12 und der zweiten Elektrodenschicht 13 angeordnete erste Isolationsschicht 14. Auf der ersten Elektrodenschicht 12 sind eine erste Abdeckschicht 21 sowie eine zweite Abdeckschicht 42 ausgebildet. Die erste Elektrodenschicht 13 weist keine Anordnung von Öffnungen zur Bildung von Durchgängen auf (siehe Fig. 10a).

Innerhalb der zweiten Elektrodenschicht 13 sind Lücken 95 ausgebildet. Die erste Isolationsschicht 14 wird derart auf der zweiten Elektrodenschicht 13 angeordnet, dass die Öffnungen 16 der ersten Isolationsschicht 14 nicht oberhalb der Lücken 95 angeordnet sind.

Die erste Elektrodenschicht 12 ist hingegen derart angeordnet, dass die Öffnungen 15 der ersten Elektrodenschicht 12 oberhalb der Öffnungen 16 der ersten Isolationsschicht 14 angeordnet sind. Mit Hilfe der Öffnungen 15 der ersten Elektrodenschicht 12 und der Öffnungen 16 der ersten Isolationsschicht 14 werden Durchgänge 17 gebildet, wobei die Seite 31 der ersten Elektrodenschicht 13 als Boden 28 der Durchgänge, insbesondere von Sacklöchern und/oder länglichen Vertiefungen 17', 17", dient.

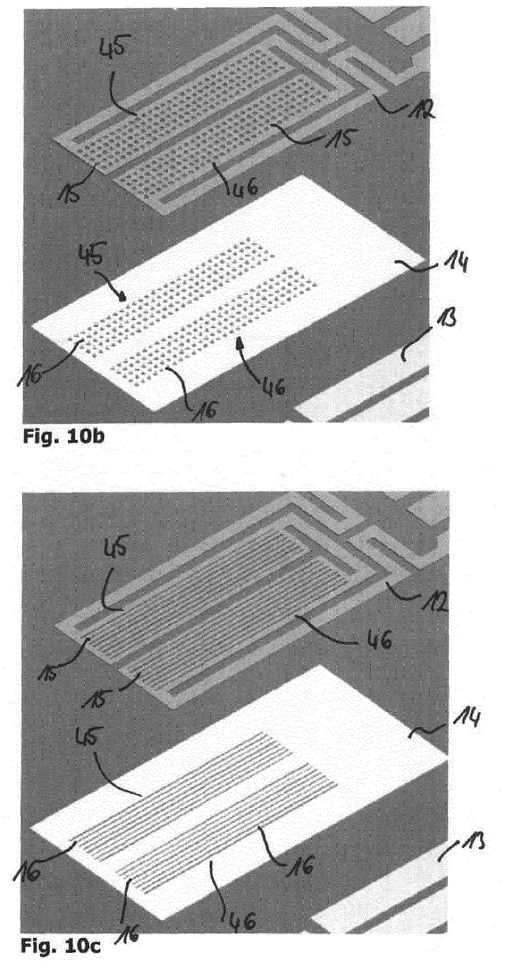

In Fig. 10b ist die Anordnung der Öffnungen 15 und 16 zueinander in einer vergrößerten Darstellung abgebildet. Es ist zu erkennen, dass sowohl in der ersten Isolationsschicht 14 als auch in der ersten Elektrodenschicht 12 jeweils ein erster Abschnitt 45 und ein zweiter Abschnitt 46 mit Öffnungen 15 und 16 ausgebildet sind. Die übereinander angeordneten Öffnungen 15 und 16 bilden jeweils sacklochartige Durchgänge 17.

Auch in Fig. 10c sind jeweils ein erster Abschnitt 45 und ein zweiter Abschnitt 46 in der ersten Isolationsschicht 14 sowie in der ersten Elektrodenschicht 12 ausgebildet. Es sind jeweils längliche Öffnungen 15, 16 in den Abschnitten 45 und 46 ausgebildet, wobei die länglichen Öffnungen 15 und 16 in gleiche Richtungen orientiert sind.

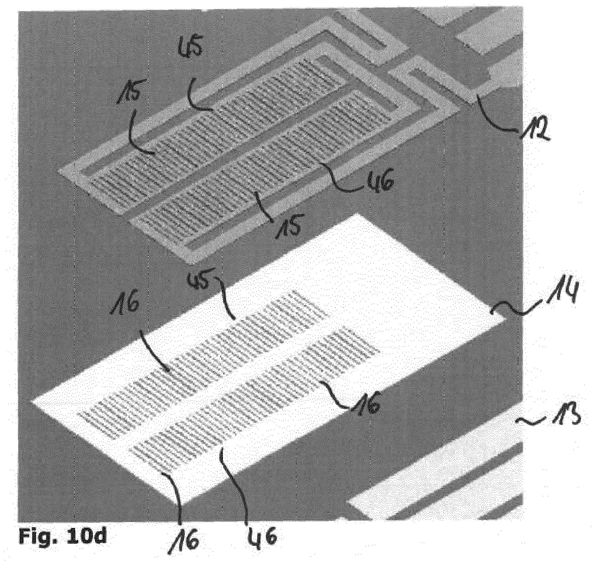

Gemäß Darstellung der Fig. 10d ist es möglich, dass die länglichen Öffnungen 15 und 16 auch senkrecht zu den in Fig. 10c dargestellten Orientierungen ausgerichtet sein können.

Es wird darauf hingewiesen, dass einige dargestellten Sensoren 10 (Fig. 1a - 1c, Fig. 4, Fig. 5, Fig. 8a-b, Fig. 9) jeweils nur als Ausschnitt dargestellt sind. Die Messung der Partikel findet vorzugsweise lediglich in den Durchgängen 17, 17', 17" statt und nicht an Seitenkanten/Seitenflächen des Sensor bzw. nicht an Seitenflächen/Seitenkanten der Sensorschichten.

Außerdem ist es möglich, dass alle dargestellten Sensoren 10 in einer weiteren Ausführungsform der Erfindung keine obere Isolationsschicht/Abdeckschicht 21 und/oder keine Filterschicht 27 aufweisen. Sofern Sensoren 10 keine obere Isolationsschicht/Abdeckschicht 21 und/oder keine Filterschicht 27 aufweisen, haben große Partikel keinen Einfluss auf das Signal bzw. auf das Messergebnis.

Hinsichtlich eines möglichen Herstellungsverfahrens im Zusammenhang mit dem erfindungsgemäßen Sensoren 10 der Fig. 1a-c, 2, 4, 5, 8a-b, 9 und Fig. 10a-d wird auf die bereits beschriebenen Herstellungsmöglichkeiten, insbesondere auf Ätzverfahren und/oder Laserbearbeitungsverfahren, verwiesen.

An dieser Stelle sei darauf hingewiesen, dass alle oben im Zusammenhang mit den Ausführungsformen gemäß Fig. 1a bis 10d beschriebene Elemente und Bauteile für sich allein gesehen oder in jeder Kombination, insbesondere die in den Zeichnungen dargestellten Details als erfindungswesentlich beansprucht werden.

### Bezugszeichenliste

- 10: Sensor
- 11: Substrat
- 12: erste Elektrodenschicht
- 13: zweite Elektrodenschicht
- 14: erste Isolationsschicht
- 15: Öffnung erste Elektrodenschicht
- 16: Öffnung erste Isolationsschicht
- 17: Durchgang
- 17', 17": längliche Vertiefung
- 18: Haftvermittlerschicht
- 19: Seitenfläche zweite Elektrodenschicht
- 20: Seite der ersten Elektrodenschicht
- 21: Abdeckschicht
- 22: Seitenfläche erste Elektrodenschicht
- 23: Seitenfläche Isolationsschicht
- 24: oberer Abschnitt Abdeckschicht
- 25: Seitenabschnitt Abdeckschicht
- 26: Seite Abdeckschicht
- 27: poröse Filterschicht
- 28: Boden
- 29: Öffnung Abdeckschicht
- 30, 30': Partikel
- 31: Seite zweite Elektrodenschicht
- 32: Randbereich erste Elektrodenschicht
- 33: elektrische Kontaktierungsfläche erste Elektrodenschicht
- 34: elektrische Kontaktierungsfläche zweite Elektrodenschicht
- 35: zusätzliche elektrische Kontaktierungsfläche zweite Elektrodenschicht
- 36: Leiterbahnschleife
- 37: Seite Isolationsschicht
- 40: Pore erste Elektrodenschicht
- 41: Pore Isolationsschicht
- 42: zweite Abdeckschicht
- 45: erster Abschnitt
- 46: zweiter Abschnitt
- 47: mittiger Abschnitt
- 48: rahmenartiger Abschnitt
- 50: dritte Elektrodenschicht
- 51: vierte Elektrodenschicht
- 60: zweite Isolationsschicht
- 61: dritte Isolationsschicht
- 70: Öffnung dritte Elektrodenschicht
- 71: Öffnung zweite Isolationsschicht
- 72: Öffnung vierte Elektrodenschicht
- 73: Öffnung dritte Isolationsschicht
- 80, 80', 80": Öffnung
- 90: Unterschneidung
- 95: Lücke
- a: Strömungsrichtung
- b: Breite Sensorschicht
- l: Länge Sensorschicht
- B1: Breite Durchgang
- B2: Breite Durchgang
- d: Dicke Isolationsschicht
- x: Längsachse der länglichen Vertiefungen
- α: Winkel zwischen der Normalen auf der Elektrodenebene und der Strömungsrichtung
- β: Winkel zwischen der Längsachse und der Strömungsrichtung

## Patentansprüche

1. Sensor (10) zur Detektion von Rußpartikel (30) in einem Abgasstrom von Verbrennungsmotoren, umfassend ein Substrat (11), eine erste Elektrodenschicht (12) und eine, zwischen dem Substrat (11) und der ersten Elektrodenschicht (12) angeordnete, zweite Elektrodenschicht (13), wobei zwischen der ersten Elektrodenschicht (12) und der zweiten Elektrodenschicht (13) mindestens eine erste Isolationsschicht (14) ausgebildet ist und in der ersten Elektrodenschicht (12) und in der ersten Isolationsschicht (14) jeweils mindestens eine Öffnung (15; 16) ausgebildet ist,
**dadurch gekennzeichnet, dass**
- zwischen der ersten Isolationsschicht (14) und der ersten Elektrodenschicht (12) mindestens eine dritte Elektrodenschicht (50) ausgebildet ist, und
- zwischen der dritten Elektrodenschicht (50) und der ersten Elektrodenschicht (12) mindestens eine zweite Isolationsschicht (60) ausgebildet ist, wobei
in der mindestens zweiten Isolationsschicht (60) und in der mindestens dritten Elektrodenschicht (70) jeweils mindestens eine Öffnung (70; 71) ausgebildet ist, wobei die Öffnung (15) der ersten Elektrodenschicht (12), die Öffnung (71) der mindestens zweiten Isolationsschicht (60), die Öffnung (70) der mindestens dritten Elektrodenschicht (50) und die Öffnung (16) der ersten Isolationsschicht (14) zumindest abschnittsweise derart übereinander angeordnet sind, dass mindestens ein Durchgang (17, 17', 17") zur zweiten Elektrodenschicht (13) gebildet ist, wobei der Boden des Durchgangs (17, 17', 17") durch einen Abschnitt der zweiten Elektrodenschicht (13) gebildet ist.

2. Sensor (10) nach Anspruch 1,
**dadurch gekennzeichnet, dass**
die erste Elektrodenschicht (12) und/oder die zweite Elektrodenschicht (13) und/oder die mindestens dritte Elektrodenschicht (50) aus einem leitfähigen Material, insbesondere aus Metall oder einer Legierung, insbesondere aus einem hochtemperaturfesten Metall oder einer hochtemperaturfesten Legierung, besonders bevorzugt aus einem Metall der Platinmetalle oder aus einer Legierung aus einem Metall der Platinmetalle, gebildet ist.

3. Sensor (10) nach einem der vorhergehenden Ansprüche,
**gekennzeichnet durch**
die Ausbildung des mindestens einen Durchgangs (17) als Sackloch, wobei ein Abschnitt der zweiten Elektrodenschicht (13) als Boden (28) des Sacklochs ausgebildet ist und sich das Sackloch mindestens über die erste Isolationsschicht (14), über die mindestens dritte Elektrodenschicht (50), über die mindestens zweite Isolationsschicht (60), über die erste Elektrodenschicht (12) und über eine optional ausgebildete Abdeckschicht (21) erstreckt.

4. Sensor (10) nach Anspruch 3,
**dadurch gekennzeichnet, dass**
das Sackloch einen quadratischen Querschnitt mit einer Fläche von 3 x 3 µm² - 150 x 150 µm², insbesondere von 10 x 10 µm² - 100 x 100 µm², insbesondere von 15 x 15 µm² - 50 x 50 µm², insbesondere von 20 x 20 µm², aufweist.

5. Sensor (10) nach einem der vorhergehenden Ansprüche, insbesondere nach Anspruch 3 oder 4,
**gekennzeichnet durch**
die Ausbildung einer Vielzahl von Durchgängen (17, 17', 17"), insbesondere einer Vielzahl von Sacklöchern, wobei mindestens zwei Durchgänge (17, 17', 17"), insbesondere mindestens zwei Sacklöcher, unterschiedlich große Querschnitte aufweisen.

6. Sensor (10) nach einem der vorhergehenden Ansprüche,
**dadurch gekennzeichnet, dass**
Öffnungen der ersten Isolationsschicht (14), der mindestens dritten Elektrodenschicht (50), der mindestens zweiten Isolationsschicht (60) und der ersten Elektrodenschicht (12) jeweils linienförmig oder jeweils mäandrierend oder jeweils gitterförmig oder spiralartig ausgebildet sind.

7. Sensor (10) nach einem der vorhergehenden Ansprüche, insbesondere nach Anspruch 6,
**gekennzeichnet durch**
die Ausbildung des mindestens einen Durchgangs (17, 17', 17") als längliche Vertiefung, wobei ein Abschnitt der zweiten Elektrodenschicht (13) als Boden der länglichen Vertiefung ausgebildet ist und sich die längliche Vertiefung mindestens über die erste Isolationsschicht (14), über die mindestens dritte Elektrodenschicht (50), über die mindestens zweite Isolationsschicht (60), über die erste Elektrodenschicht (12) und über eine optional ausgebildete Abdeckschicht (21) erstreckt.

8. Sensor (10) nach einem der vorhergehenden Ansprüche,
**dadurch gekennzeichnet, dass**
die erste Elektrodenschicht (12), die zweite Elektrodenschicht (13) und die mindestens dritte Elektrodenschicht (50) jeweils eine elektrische Kontaktierungsfläche (33; 34) aufweisen, die frei von über den jeweiligen Elektrodenschichten (12; 13; 50) angeordneten Sensorschichten (12; 14; 21; 27; 50; 51; 60; 61) sind und jeweils an ein Anschlusspad angeschlossen oder anschließbar sind.

9. Sensorsystem, umfassend mindestens einen Sensor (10) nach einem der Ansprüche 1 bis 8, und mindestens eine Steuerung, insbesondere mindestens eine Steuerschaltung, die derart ausgebildet ist, dass der Sensor (10) in einem Messmodus und/oder in einem Reinigungsmodus und/oder in einem Überwachungsmodus betreibbar ist.

10. Verfahren zur Steuerung eines Sensors (10) nach einem der Ansprüche 1 bis 8,
**dadurch gekennzeichnet, dass**
der Sensor (10) wahlweise in einem Messmodus und/oder einem Reinigungsmodus und/oder einem Überwachungsmodus betrieben wird.

11. Verfahren nach Anspruch 10,
**dadurch gekennzeichnet, dass**
im Messmodus eine Änderung des elektrischen Widerstands zwischen den Elektrodenschichten (12; 13; 50; 51) des Sensors und/oder eine Änderung der Kapazitäten der Elektrodenschichten (12; 13; 50; 51) gemessen wird/werden.

12. Verfahren zum Herstellung eines Sensors (10) nach einem der Ansprüche 1 bis 8, wobei ein Schichtverbund mit
- einer ersten Elektrodenschicht (12),
- einer zweiten Elektrodenschicht (13),
- einer zwischen der ersten Elektrodenschicht (12) und der zweiten Elektrodenschicht (13) angeordneten ersten Isolationsschicht (14),
- mindestens einer zwischen der ersten Isolationsschicht (14) und der ersten Elektrodenschicht (12) angeordneten dritten Elektrodenschicht (50) und
- mindestens einer zwischen der dritten Elektrodenschicht (50) und der ersten Elektrodenschicht (12) angeordneten zweiten Isolationsschicht (60) auf einem Substrat (11) hergestellt wird,
wobei in den Schichtverbund anschließend mindestens ein Durchgang (17, 17', 17") eingebracht wird, der sich über die erste Elektrodenschicht (12), die mindestens zweite Isolationsschicht (60), die mindestens dritte Elektrodenschicht (50) und die erste Isolationsschicht (14) erstreckt, wobei der Boden (28) des Durchgangs (17, 17', 17") durch einen Abschnitt der zweiten Elektrodenschicht (13) gebildet wird.

13. Verfahren nach Anspruch 12,
**dadurch gekennzeichnet, dass**
der mindestens eine Durchgang als Sackloch (17) und/oder als längliche Vertiefung (17', 17") ausgebildet wird und das mindestens eine Sackloch oder ein Teilabschnitt des Sacklochs und/oder die mindestens eine längliche Vertiefung oder ein Teilabschnitt der länglichen Vertiefung durch ein Bestrahlungsverfahren mit elektromagnetischen Wellen oder geladenen Teilchen in den Schichtverbund eingebracht wird, wobei die Strahlungsquelle und/oder die Wellenlänge und/oder die Pulsfrequenz der Strahlung und/oder die Energie der geladenen Teilchen und/oder Art der geladenen Teilchen an die jeweils zu bearbeitende Schicht (12; 14; 21; 50; 51; 60; 61) des Schichtverbunds angepasst wird.

14. Verfahren nach Anspruch 13,
**dadurch gekennzeichnet, dass**
der mindestens eine Durchgang als Sackloch (17) und/oder als längliche Vertiefung (17', 17") ausgebildet wird und das mindestens eine Sackloch oder ein Teilabschnitt des Sacklochs und/oder die mindestens eine längliche Vertiefung oder ein Teilabschnitt der länglichen Vertiefung durch ein Laserbearbeitungsverfahren, insbesondere mittels Ultrakurzpulslaser, in den Schichtverbund eingebracht wird, wobei die Laserquelle und/oder die Wellenlänge und/oder die Pulsfrequenz des Lasers und/oder die Energie der geladenen Teilchen und/oder Art der geladenen Teilchen an die jeweils zu bearbeitende Schicht (12; 14; 21; 50; 51; 60; 61) des Schichtverbunds angepasst wird.

15. Verwendung eines Sensors (10) nach einem der Ansprüche 1 bis 8 zur Detektion von Rußpartikel,
**dadurch gekennzeichnet, dass**
die Strömungsrichtung (a) der Partikel (30, 30') nicht senkrecht auf die Ebene (x,y) der ersten Elektrodenschicht (12) auftrifft.

16. Verwendung eines Sensors (10) nach Anspruch 15 zur Detektion von Rußpartikel,
**dadurch gekennzeichnet, dass**
der Winkel (α) zwischen der Normalen (z) auf der Ebene (x,y) der ersten Elektrodenschicht (12) und der Strömungsrichtung (a) der Partikel mindestens 1 Grad, bevorzugt mindestens 10 Grad, besonders bevorzugt mindestens 30 Grad, beträgt.

## Claims

1. Sensor (10) for the detection of soot particles (30) in an exhaust gas stream of combustion engines, comprising a substrate (11), a first electrode layer (12) and, arranged between the substrate (11) and the first electrode layer (12), a second electrode layer (13), wherein between the first electrode layer (12) and the second electrode layer (13) at least one insulation layer (14) is provided and in the first electrode layer (12) as well as in the first insulation layer (14) at least one opening (15; 16) is formed,
**characterised in that**
- between the first insulation layer (14) and the first electrode layer (12) there is at least one third electrode layer (50), and
- between the third electrode layer (50) and the first electrode layer (12) there is at least one second insulation layer (60), wherein
in both the at least second insulation layer (60) and in the at least third electrode layer (70) there is at least one opening (70; 71), wherein the opening (15) of the first electrode layer (12), the opening (71) of the at least second insulation layer (60), the opening (70) of the at least third electrode layer (50) and the opening (16) of the first insulation layer (14) are at least in sections arranged above each other in such a way that at least one passage (17, 17', 17") through a section of the second electrode layer (13) is formed wherein the base of the passage (17, 17, 17") is formed by a section of the second electrode layer (13).

2. Sensor (10) according to claim 1
**characterised in that**
the first electrode layer (12) and/or the second electrode layer (13) and/or the at least one third electrode layer (50) is/are made of a conducting material, in particular of metal or an alloy, more particularly of a high temperature-resistant metal or a high-temperature-resistant alloy, particularly preferably a metal of the platinum metals or an alloy of a metal of the platinum metals.

3. Sensor (10) according to any one of the preceding claims
**characterised by**
the formation of at least one passage (17) as a blind hole, wherein one section of the second electrode layer (13) is configured as the base (28) of the blind hole and the blind hole extends at least over the first insulation layer (14), over the at least third insulation layer (50), over the at least second insulation layer (60), over the first electrode layer (12) and over an optionally provided cover layer (21).

4. Sensor (10) according to claim 3
**characterised in that**
the blind hole has a quadratic cross-section with an area of 3 x 3 µm² - 150 x 150 µm², more particularly of 10 x 10 µm² - 100 x 100 µm², in particular of 15 x 15 µm² - 50 x 50 µm², particularly of 20 x 20 µm².

5. Sensor (10) according to any one of the preceding claims, in particular according to claim 3 or 4
**characterised by**
the formation of a plurality of passages (17, 17', 17"), more particularly a plurality of blind holes, wherein at least two passages (17, 17', 17") comprise at least two blind holes of differently dimensioned cross-sections.

6. Sensor (10) according to any one of the preceding claims
**characterised in that**
openings of the first insulation layer (14), the at least third electrode layer (50), the at least second insulation layer (60) and the first electrode layer (12) are respectively formed linearly or respectively formed in a meandering manner or grid-like or spiral-like manner.

7. Sensor (10) according to any one of the preceding claims, in particular according claim 6
**characterised by**
the formation of the at least one passage (17, 17', 17") as an elongated recess, wherein one section of the second electrode layer (13) is designed as the base of the elongated recess and the elongated recess extends at least over the first insulation layer (14), over the at least third electrode layer (50), over the at least second insulation layer (60), over the first electrode layer (12) and over an optionally provided cover layer (21) .

8. Sensor (10) according to any one of the preceding claims,
**characterised in that**
the first electrode layer (12), the second electrode layer (13) and the at least third electrode layer (50) each comprise an electrical contacting surface (33; 34) which is free of the sensor layers (12; 14; 21; 27; 50; 51; 60; 61) arranged over the respective electrode layers (12; 13; 50) and in each case is or can be connected to a connection pad.

9. Sensor system comprising at least one sensor (10) according to any one of claims 1 to 8 and at least one control, in particular at least one control circuit, which is configured in such a way that the sensor (10) can be operated in a measuring mode and/or in a cleaning mode and/or in a monitoring mode.

10. Method of controlling a sensor (10) according to any of claims 1 to 8,
**characterised in that**
the sensor (10) is optionally operated in a measuring mode and/or in a cleaning mode and/or in a monitoring mode.

11. Method according to claim 10,
**characterised in that**
in the measuring mode a change in the electrical resistance between the electrode layers (12; 13; 50; 51) of the sensor and/or a change in the capacitances of the electrode layers (12; 13; 50; 51) is/can be measured.

12. Method of producing a sensor (10) according to any one of claims 1 to 8 wherein a layer composite with
- a first electrode layer (12),
- a second electrode layer (13),
- a first insulation layer (14) arranged between the first electrode layer (12) and the second electrode layer (13),
- at least one third electrode layer (50) arranged between the first insulation layer (14) and the first electrode layer (12) and
- at least one second insulation layer (60) arranged between the third electrode layer (50) and the first electrode layer (12)
is produced on a substrate (11),
wherein in the layer composite at least one passage (17, 17', 17") is incorporated which extends over the first electrode layer (12), the at least second insulation layer (60), the at least third electrode layer (50) and the first insulation layer (14), wherein the base (28) of the passage (17, 17' 17") is formed by a section of the second electrode layer (13).

13. Method according to claim 12,
**characterised in that**
the at least one passage is designed as a blind hole (17) and/or as an elongated recess (17', 17") and the at least one blind hold or a partial section of the blind hole and/or the at least one elongated recess or a partial section of the elongated recess is incorporated into the layer composite though an irradiation method with electromagnetic waves or charged particles, wherein the radiation source and/or the wavelength and/or the pulse frequency of the radiation and/or the energy of the charged particles and/or nature of the charged particles is adapted to the respective layer (12; 14; 21; 50; 51; 60; 61) of the composite layer which is to be processed.

14. Method according to claim 13
**characterised in that** the at least one passage is designed a blind hole (17) and/or as an elongated recess (17', 17") and the at least one blind hole or a partial section of the blind hole and/or the at least one elongated recess or a partial section of the elongated recess is incorporated into the layer composite by way of a laser processing method, in particular by means of ultra-short lasers, wherein the laser source and/or the wavelength and/or the pulse frequency of the laser and/or the energy of the charged particles and/or the nature of the charged particles is adapted to the respective layer (12; 14; 21; 50; 51; 60; 61) of the composite layer which is to be processed.

15. Usage of a sensor (10) according to any one of claims 1 to 8 for the detection of soot particles,
**characterised in that**
the flow direction (a) of the particles (30, 30') does not perpendicularly strike the plane (x, y) of first electrode layer (12).

16. Use of a sensor (10) according to claim 15 for the detection of soot particles
**characterised in that**
the angle (α) between the normal (z) on the plane (x, y) of the first electrode layer (12) and the flow direction (a) of the particles is at least 1 degree, preferably at least 10 degrees, particularly preferably at least 30 degrees.

## Revendications

1. Capteur (10) de détection de particules de suie (30) dans un flux de gaz d'échappement de moteurs à combustion, comprenant un substrat (11), une première couche d'électrodes (12) et une deuxième couche d'électrodes (13) disposée entre le substrat (11) et la première couche d'électrodes (12), sachant qu'entre la première couche d'électrodes (12) et la deuxième couche d'électrodes (13) est constituée au moins une première couche d'isolation (14) et au moins respectivement une ouverture (15 ; 16) est constituée dans la première couche d'électrodes (12) et dans la première couche d'isolation (14),
**caractérisé en ce qu'**
- entre la première couche d'isolation (14) et la première couche d'électrodes (12) est constituée au moins une troisième couche d'électrodes (50), et
- entre la troisième couche d'électrodes (50) et la première couche d'électrodes (12) est constituée au moins une deuxième couche d'isolation (60), sachant que
dans au moins la deuxième couche d'isolation (60) et au moins la troisième couche d'électrodes (70) est constituée respectivement au moins une ouverture (70 ; 71), sachant que l'ouverture (15) de la première couche d'électrodes (12), l'ouverture (71) d'au moins la deuxième couche d'isolation (60), l'ouverture (70) d'au moins la troisième couche d'électrodes (50) et l'ouverture (16) de la première couche d'isolation (14) sont disposées au moins par endroit l'une sur l'autre de telle manière qu'au moins un passage (17, 17', 17") est formé vers la deuxième couche d'électrodes (13), sachant que le fond du passage (17, 17', 17") est formé par une section de la deuxième couche d'électrodes (13) .

2. Capteur (10) selon la revendication 1,
**caractérisé en ce que**
la première couche d'électrodes (12) et/ou la deuxième couche d'électrodes (13) et/ou au moins la troisième couche d'électrodes (50) est formée d'un matériau conducteur, en particulier d'un métal ou d'un alliage, en particulier d'un métal résistant aux températures élevées ou d'un alliage résistant aux températures élevées, en particulier de préférence d'un métal faisant partie des métaux à base de platine ou d'un alliage d'un métal faisant partie des métaux à base de platine.

3. Capteur (10) selon l'une quelconque des revendications précédentes,
**caractérisé par**
la constitution d'au moins un passage (17) sous la forme d'un trou borgne, sachant qu'une section de la deuxième couche d'électrodes (13) est constituée en tant que fond (28) du trou borgne et le trou borgne s'étend au moins sur la première couche d'isolation (14), sur au moins la troisième couche d'électrodes (50), sur au moins la deuxième couche d'isolation (60), sur la première couche d'électrodes (12) et sur une couche de couverture (21) constituée en option.

4. Capteur (10) selon la revendication 3,
**caractérisé en ce que**
le trou borgne comporte une section quadratique d'une surface de 3 x 3 µm² - 150 x 150 µm², en particulier de 10 x 10 µm² - 100 x 100 µm², en particulier de 15 x 15 µm² - 50 x 50 µm², en particulier de 20 x 20 µm².

5. Capteur (10) selon l'une quelconque des revendications précédentes, en particulier selon la revendication 3 ou 4,
**caractérisé par**
la constitution d'une pluralité de passages (17, 17', 17"), en particulier d'une pluralité de trous borgnes, sachant qu'au moins deux passages (17, 17', 17") comportent en particulier deux trous borgnes, de sections de taille différente.

6. Capteur (10) selon l'une quelconque des revendications précédentes,
**caractérisé en ce que**
les ouvertures de la première couche d'isolation (14), d'au moins la troisième couche d'électrodes (50), d'au moins la deuxième couche d'isolation (60) et de la première couche d'électrodes (12) sont respectivement constituées en forme de lignes ou respectivement en forme de méandres ou respectivement en forme de grille ou de spirale.

7. Capteur (10) selon l'une quelconque des revendications précédentes, en particulier selon la revendication 6,
**caractérisé par**
la constitution d'au moins un passage (17, 17', 17") sous la forme d'une cavité longitudinale, sachant qu'une section de la deuxième couche d'électrodes (13) est constituée en tant que fond de la cavité longitudinale et la cavité longitudinale s'étend au moins sur la première couche d'isolation (14), sur au moins la troisième couche d'électrodes (50), sur au moins la deuxième couche d'isolation (60), sur la première couche d'électrodes (12) et sur une couche de couverture (21) constituée en option.

8. Capteur (10) selon l'une quelconque des revendications précédentes,
**caractérisé en ce que**
la première couche d'électrodes (12), la deuxième couche d'électrodes (13) et au moins la troisième couche d'électrodes (50) comportent respectivement une surface de contact électrique (33 ; 34), qui sont dépourvues de couches de capteur (12 ; 14 ; 21 ; 27 ; 50 ; 51 ; 60 ; 61) disposées sur les couches d'électrode (12 ; 13 ; 50) respectives et sont ou peuvent être raccordées respectivement à un plot de connexion.

9. Système de capteur, comprenant au moins un capteur (10) selon l'une quelconque des revendications 1 à 8, et au moins une commande, en particulier au moins un circuit de commande, qui est constitué de telle manière que le capteur (10) peut être utilisé dans un mode de mesure et/ou un mode de nettoyage et/ou un mode de surveillance.

10. Procédé de commande d'un capteur (10) selon l'une quelconque des revendications 1 à 8,
**caractérisé en ce que**
le capteur (10) est utilisé selon nécessité dans un mode de mesure et/ou un mode de nettoyage et/ou un mode de surveillance.

11. Procédé selon la revendication 10,
**caractérisé en ce que**
dans le mode de mesure, on mesure une modification de la résistance électrique entre les couches d'électrodes (12 ; 13 ; 50 ; 51) du capteur et/ou une modification des capacités des couches d'électrodes (12 ; 13 ; 50 ; 51) .

12. Procédé de fabrication d'un capteur (10) selon l'une quelconque des revendications 1 à 8, sachant qu'un composite en couches est fabriqué sur un substrat (11) avec
- une première couche d'électrodes (12),
- une deuxième couche d'électrodes (13),
- une première couche d'isolation (14) disposée entre la première couche d'électrodes (12) et la deuxième couche d'électrodes (13),
- au moins une troisième couche d'électrodes (50) disposée entre la première couche d'isolation (14) et la première couche d'électrodes (12), et
- au moins une deuxième couche d'isolation (60) disposée entre la troisième couche d'électrodes (50) et la première couche d'électrodes (12),
sachant que dans le composite en couches est ensuite aménagé au moins un passage (17, 17', 17"), qui s'étend sur la première couche d'électrodes (12), au moins la deuxième couche d'isolation (60), au moins la troisième couche d'électrodes (50) et la première couche d'isolation (14), sachant que le fond (28) du passage (17, 17', 17") est formé par une section de la deuxième couche d'électrodes (13).

13. Procédé selon la revendication 12,
**caractérisé en ce qu'**
au moins un passage est constitué en tant que trou borgne (17) et/ou en tant que cavité longitudinale (17', 17") et au moins un trou borgne ou une partie de section du trou borgne et/ou au moins une cavité longitudinale du trou borgne et/ou au moins une cavité longitudinale ou une partie de section de la cavité longitudinale est aménagé dans le composite en couches par un procédé de rayonnement avec des ondes électromagnétiques ou des particules chargées, sachant que la source de rayonnement et/ou la longueur d'onde et/ou la fréquence d'impulsions du rayonnement et/ou l'énergie des particules chargées et/ou le type des particules chargées est adapté respectivement à la couche à usiner (12 ; 14 ; 21 ; 50 ; 51 ; 60 ; 61) du composite en couches.

14. Procédé selon la revendication 13,
**caractérisé en ce qu'**
au moins un passage est constitué comme un trou borgne (17) et/ou comme cavité longitudinale (17', 17") et au moins un trou borgne ou une partie de section du trou borgne et/ou au moins une cavité longitudinale ou une partie de section de la cavité longitudinale est aménagé dans le composite en couches par un procédé d'usinage au laser, en particulier au moyen d'un laser à impulsions ultracourtes, sachant que la source de laser et/ou la longueur d'onde et/ou la fréquence d'impulsions du laser et/ou l'énergie des particules chargées et/ou le type des particules chargées est adapté à la couche respectivement à usiner (12 ; 14 ; 21 ; 50 ; 51 ; 60 ; 61) du composite en couches.

15. Utilisation d'un capteur (10) selon l'une quelconque des revendications 1 à 8 pour la détection de particules de suie,
**caractérisé en ce que**
la direction du flux (a) des particules (30, 30') ne rencontre pas perpendiculairement le plan (x, y) de la première couche d'électrodes (12).

16. Utilisation d'un capteur (10) selon la revendication 15 pour la détection de particules de suie,
**caractérisé en ce que**
l'angle (a) entre la normale (z) sur le plan (x, y) de la première couche d'électrodes (12) et la direction du flux (a) des particules est d'au moins 1 degré, de préférence d'au moins 10 degrés, en particulier de préférence d'au moins 30 degrés.
